# EUROPEAN PATENT APPLICATION

(11) **EP 4 509 203 A1**
(43) Date of publication of application: **19.02.2025**
(21) Application number: 23803198.3
(22) Date of filing: 07.02.2023
(51) Int. Cl.: B01D 53/14, B01D 53/50, B01D 53/62, B01D 53/64, B01D 53/78, B01D 53/82, B01D 53/83, B01D 53/86, B01D 53/96, F23J 15/00, F23J 15/06

(54) **EXHAUST GAS TREATMENT SYSTEM, POWER GENERATION FACILITY COMPRISING SAME, AND EXHAUST GAS TREATMENT METHOD**

(30) Priority: 13.05.2022 JP 2022079740
(71) Applicant: Mitsubishi Heavy Industries, Ltd., Tokyo 100-8332 (JP)
(72) Inventor: SUGIURA, Takuya, Tokyo 100-8332 (JP); TSUJIUCHI, Tatsuya, Tokyo 100-8332 (JP); HIRATA, Takuya, Tokyo 100-8332 (JP); KATSUKI, Masatoshi, Tokyo 100-8332 (JP); SUZUKI, Takumi, Tokyo 100-8332 (JP); IMADA, Junji, Tokyo 100-8332 (JP); SHINDO, Yoshitaka, Tokyo 100-8332 (JP)
(74) Representative: Studio Torta S.p.A.
(86) International application number: PCT/JP2023/003971
(87) International publication number: WO 2023/218707

(57) **Abstract**

The exhaust gas treatment system according to the present disclosure comprise: a dust collection installation including a denitration layer carrying a denitration catalyst, wherein exhaust gas passes through the dust collection installation; and a carbon dioxide collection device located downstream of the dust collection installation in the exhaust gas flowing direction. Exhaust gas is supplied from the dust collection installation to the carbon dioxide collection device in a condition such that the temperature of the exhaust gas is maintained to be equal to or less than the gas temperature at the outlet of the dust collection installation.

## Description

### Technical Field

The present disclosure relates to an exhaust gas treatment system, a power generation facility including the same, and an exhaust gas treatment method.

This application claims priority to Japanese Patent Application No. 2022-79740, filed in Japan on May 13, 2022, the content of which is incorporated herein by reference.

### Background Art

For example, PTL 1 discloses a conventional exhaust gas treatment system that is introduced into a facility such as a waste incineration plant. The exhaust gas treatment system includes a boiler that recovers heat from exhaust gas from the incinerator, a cooling tower that cools the exhaust gas, a dust collector that removes dust from the exhaust gas, a reheater that reheats the exhaust gas, a catalytic reaction tower that performs denitrification on the exhaust gas reheated by the reheater by being provided with a denitration catalyst, and a chimney.

### Citation List

### Patent Literature

[PTL 1] Japanese Unexamined Patent Application Publication No. 2018-126674

### Summary of Invention

### Technical Problem

By the way, in the above-described exhaust gas treatment system, a carbon dioxide recovery device capable of recovering carbon dioxide contained in the exhaust gas may be introduced. As the power of the carbon dioxide recovery device, for example, the power in the facility into which the exhaust gas treatment system is introduced is used. Therefore, there is a demand for reducing the power used in a process of treating the exhaust gas in the system. In addition, in a case where the treatment of the gas is insufficient, the amount of impurities contained in the exhaust gas may increase, and as a result, the consumption of the absorption liquid used in the carbon dioxide recovery device may increase.

The present disclosure has been made to solve the above-described problems, and an object of the present disclosure is to provide an exhaust gas treatment system, a power generation facility including the same, and an exhaust gas treatment method, which can suppress an increase in consumption of an absorption liquid in a carbon dioxide recovery device while reducing power used in a process of treating exhaust gas.

### Solution to Problem

According to the present disclosure, there is provided an exhaust gas treatment system including: a dust collection facility that includes a denitration layer on which a denitration catalyst is carried and through which exhaust gas passes, and a carbon dioxide recovery device that is positioned on a downstream side of the dust collection facility in a flow direction of the exhaust gas, in which the exhaust gas is supplied from the dust collection facility to the carbon dioxide recovery device while maintaining a state where a temperature of the exhaust gas is equal to or lower than a temperature of outlet gas of the dust collection facility.

According to the present disclosure, there is provided a power generation facility that incinerates an object to be incinerated to generate power, the power generation facility including an incinerator in which the object to be incinerated is incinerated, a boiler that is positioned on an upstream side of the dust collection facility in the flow direction of the exhaust gas and to which the exhaust gas generated by the incinerator is supplied, the exhaust gas treatment system into which the exhaust gas that has passed through the boiler is introduced, in which the exhaust gas treatment system includes a reducing agent supply portion capable of supplying a reducing agent to the exhaust gas that flows on an upstream side of the dust collection facility in the flow direction of the exhaust gas and a reducing agent introduction line connecting the carbon dioxide recovery device and the boiler, the carbon dioxide recovery device includes a cooling tower that cools the exhaust gas, an absorption tower that absorbs carbon dioxide included in the cooled exhaust gas into an absorption liquid, a regeneration tower that heats the absorption liquid in which the carbon dioxide has been absorbed by a reboiler to which a heat medium is supplied, and separates the carbon dioxide from the absorption liquid, and a reclaimer that separates the absorption liquid from the regeneration tower into a first liquid in which impurities are concentrated and a second liquid from which impurities are separated, and the reducing agent introduction line, as the reducing agent supply portion, supplies the first liquid from the reclaimer into the incinerator as the reducing agent.

According to the present disclosure, there is provided an exhaust gas treatment method that is used in a facility in which exhaust gas is generated, the facility including a dust collection facility that includes a denitration layer on which a denitration catalyst is carried and through which the exhaust gas passes, and a carbon dioxide recovery device that is positioned on a downstream side of the dust collection facility in a flow direction of the exhaust gas, the exhaust gas treatment method including: supplying the exhaust gas from the dust collection facility to the carbon dioxide recovery device while maintaining a state where a temperature of the exhaust gas is equal to or lower than a temperature of outlet gas of the dust collection facility.

### Advantageous Effects of Invention

According to the present disclosure, it is possible to provide an exhaust gas treatment system, a power generation facility including the same, and an exhaust gas treatment method, which can suppress an increase in consumption of an absorption liquid in a carbon dioxide recovery device while reducing power used in a process of treating the exhaust gas.

### Brief Description of Drawings

Fig. 1 is a diagram showing a configuration of a power generation facility according to a first embodiment of the present disclosure.
Fig. 2 is a diagram schematically showing a temperature change of the exhaust gas flowing through the exhaust gas flow path.
Fig. 3 is a functional block diagram of a control device according to the embodiment of the present disclosure.
Fig. 4 is a flowchart illustrating an example of the operation of the control device according to the embodiment of the present disclosure.
Fig. 5 is a flowchart illustrating an example of the operation of the control device according to the embodiment of the present disclosure.
Fig. 6 is a diagram showing a part of a configuration of a power generation facility according to a second embodiment of the present disclosure.
Fig. 7 is a functional block diagram of a control device according to the embodiment of the present disclosure.
Fig. 8 is a flowchart illustrating an example of the operation of the control device according to the embodiment of the present disclosure.
Fig. 9 is a diagram showing a configuration of a power generation facility according to the third embodiment of the present disclosure.
Fig. 10 is a hardware configuration diagram illustrating a configuration of a computer according to the embodiment of the present disclosure.

### Description of Embodiments

In the following, a configuration for implementing the exhaust gas treatment system, the power generation facility, and the exhaust gas treatment method according to the present disclosure will be described with reference to the accompanying drawings.

### [First Embodiment]

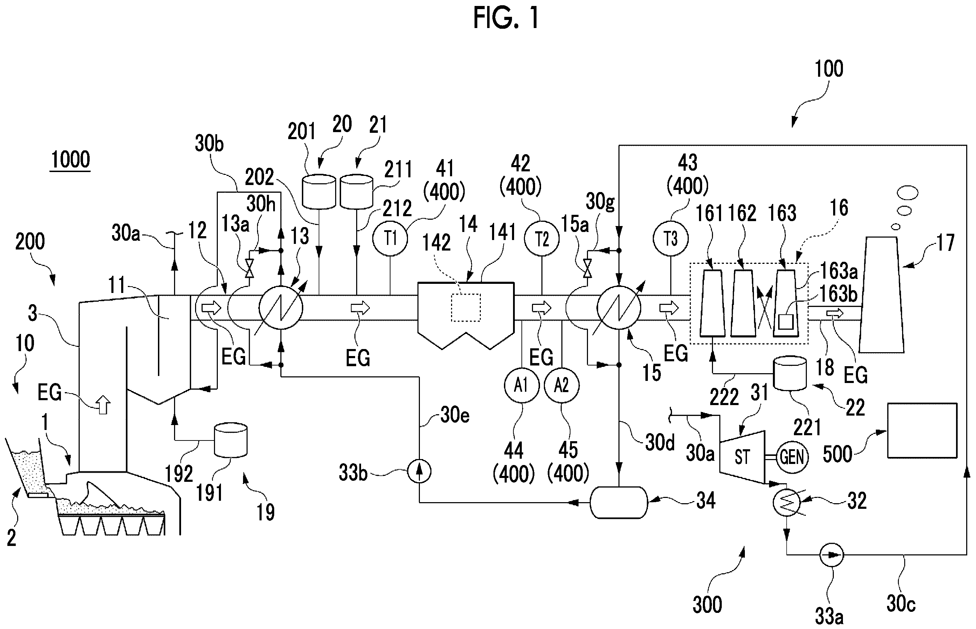

The power generation facility is, for example, a plant that performs incineration treatment on municipal solid waste, industrial waste, biomass, or the like as an object to be incinerated, and performs waste power generation by using heat of exhaust gas generated by performing incineration treatment on the object to be incinerated. As shown in Fig. 1, the power generation facility 1000 includes a garbage treatment system 200, an exhaust gas treatment system 100, a power generation system 300, a sensor 400, and a control device 500.

### (Garbage Treatment System)

The garbage treatment system 200 is a system that performs incineration treatment on the object to be incinerated in the power generation facility 1000. The garbage treatment system 200 includes the incinerator 10 and the heat recovery steam generator 11 (boiler).

### (Incinerator)

The incinerator 10 according to this embodiment is a stoker type incinerator. The incinerator 10 is a furnace that burns an object to be incinerated while transporting the object to be incinerated inside the incinerator 10. With the burning of the object to be incinerated by the incinerator 10, the incinerator 10 generates the exhaust gas EG. The generated exhaust gas EG is sent to the exhaust gas treatment system 100 connected to the upper part of the incinerator 10. The incinerator 10 includes a furnace main body 1, a fuel supply mechanism 2, and a furnace 3.

The furnace main body 1 is a main body portion in the incinerator 10. The furnace main body 1 defines a space for burning an object to be incinerated inside the furnace main body 1. Inside the furnace main body 1, the object to be incinerated is transported while being burned. An object to be incinerated, which is incinerated in the furnace main body 1 and turned into ash, is discharged to the outside of the furnace main body 1. The fuel supply mechanism 2 receives the object to be incinerated from the outside of the incinerator 10 and supplies the received object to be incinerated to the inside of the furnace main body 1. The furnace 3 extends upward from the upper portion of the furnace main body 1. The exhaust gas EG generated by the combustion of the object to be incinerated inside the furnace main body 1 is sent to the heat recovery steam generator 11 through the furnace 3.

### (Heat Recovery Steam Generator)

The heat recovery steam generator 11 is a device that heats supplied water to generate steam by performing heat exchange between the exhaust gas EG introduced from the furnace 3 and water supplied from the outside (water supply to the heat recovery steam generator 11). The heat recovery steam generator 11 according to this embodiment recovers heat from the exhaust gas EG from the furnace 3 and generates steam (main steam) for driving the steam turbine 31 of the power generation system 300 by using the heat.

Although detailed illustration is omitted, the heat recovery steam generator 11 is configured with a boiler outer frame and a heat transfer pipe and the like disposed in the boiler outer frame. The exhaust gas EG from the furnace 3 is introduced into the boiler outer frame. The discharged exhaust gas EG introduced into the boiler outer frame is cooled by being subjected to heat exchange with water introduced from the outside through the heat transfer pipe in the boiler outer frame. On the other hand, the water introduced into the heat recovery steam generator 11 is heated by the exhaust gas EG to be vapor. The exhaust gas EG that has finished heat exchange in the heat recovery steam generator 11 is introduced into the exhaust gas treatment system 100.

### (Exhaust Gas Treatment System)

It is noted that the exhaust gas treatment system 100 is a system that treats the exhaust gas EG generated in the garbage treatment system 200. The exhaust gas treatment system 100 in the present embodiment includes the exhaust gas flow path 12, the first heat recovery device 13, the dust collection facility 14, the second heat recovery device 15, the carbon dioxide recovery device 16, the reducing agent supply portion 19, the activated carbon supply portion 20, the alkaline powder supply portion 21, the alkali agent supply portion 22, the chimney 17, and the outlet flow path 18.

### (Exhaust Gas Flow Path)

The exhaust gas flow path 12 circulates the exhaust gas EG, which has been subjected to heat exchange in the heat recovery steam generator 11 of the garbage treatment system 200, inside the exhaust gas flow path 12. The exhaust gas flow path 12 is connected to an exhaust gas outlet of the heat recovery steam generator 11. Hereinafter, the direction in which the exhaust gas EG flows in the exhaust gas flow path 12 will be simply referred to as a "flow direction of the exhaust gas EG". In addition, in a flow direction of the exhaust gas EG, a side of the heat recovery steam generator 11 opposite to the exhaust gas outlet side is referred to as an "downstream side", and the exhaust gas outlet side is referred to as an "upstream side".

### (First Heat Recovery Device)

The first heat recovery device 13 is a device (heat exchanger) that performs heat exchange between the exhaust gas EG flowing through the exhaust gas flow path 12 and a heat medium introduced from the outside. That is, the first heat recovery device 13 adjusts the temperature of the exhaust gas EG flowing through the exhaust gas flow path 12. The first heat recovery device 13 according to this embodiment is an economizer. The first heat recovery device 13 is disposed in the exhaust gas flow path 12. Here, the term "in the exhaust gas flow path 12" means a partway of the exhaust gas flow path 12, not the inside of the exhaust gas flow path 12. The exhaust gas EG flowing out from the heat recovery steam generator 11 flows into the first heat recovery device 13 through the exhaust gas flow path 12. That is, the exhaust gas EG that has flowed into the first heat recovery device 13 is cooled by heat exchange with the heat medium supplied from the outside.

On the other hand, the heat medium introduced into the first heat recovery device 13 from the outside is heated by the exhaust gas EG. The heat medium supplied from the outside to the first heat recovery device 13 in the present embodiment is, for example, water (water supply to the heat recovery steam generator 11). The exhaust gas EG that has finished heat exchange in the first heat recovery device 13 flows out into the exhaust gas flow path 12 on the downstream side of the first heat recovery device 13. The heat medium heated in the first heat recovery device 13 is used as a heat source in an external device.

### (Dust Collection Facility)

The dust collection facility 14 according to this embodiment is a catalyst-supported bag filter that can remove (collect) soot or dust, remove (denitrate) nitrogen oxides, and remove harmful substances such as dioxins from the passing exhaust gas EG by allowing the exhaust gas EG flowing through the exhaust gas flow path 12 to pass therethrough. The dust collection facility 14 is disposed on a downstream side of the first heat recovery device 13 in the exhaust gas flow path 12. Therefore, the exhaust gas EG flowing out from the first heat recovery device 13 flows into the dust collection facility 14 through the exhaust gas flow path 12.

The dust collection facility 14 according to this embodiment includes a dust collection facility main body 141 and a denitration layer 142. The exhaust gas EG from the first heat recovery device 13 flows into the dust collection facility main body 141 through the exhaust gas flow path 12. The denitration layer 142 is a filter cloth (filter) disposed inside the dust collection facility main body 141. A denitration catalyst capable of denitrating the exhaust gas EG is supported on the denitration layer 142. The denitration layer 142 is carried by the denitration catalyst and desulfurizes the exhaust gas EG that has flowed into the dust collection facility main body 141 by passing through the denitration layer 142. The exhaust gas EG that has passed through the dust collection facility 14 flows out into the exhaust gas flow path 12 on the downstream side of the dust collection facility 14.

### (Second Heat Recovery Device)

The second heat recovery device 15 is a device (heat exchanger) that recovers heat of the exhaust gas EG by performing heat exchange between the exhaust gas EG flowing through the exhaust gas flow path 12 and a heat medium introduced from the outside. That is, the second heat recovery device 15 adjusts the temperature of the exhaust gas EG flowing through the exhaust gas flow path 12. The second heat recovery device 15 according to this embodiment is an economizer. The second heat recovery device 15 recovers heat from the exhaust gas EG having a temperature lower than that of the exhaust gas EG flowing into the first heat recovery device 13.

The second heat recovery device 15 is disposed on a downstream side of the dust collection facility 14 in the exhaust gas flow path 12. Therefore, the exhaust gas EG from the dust collection facility 14 flows into the second heat recovery device 15 through the exhaust gas flow path 12. The exhaust gas EG that flows into the second heat recovery device 15 is cooled by being subjected to heat exchange with the heat medium supplied from the outside. On the other hand, the heat medium introduced into the second heat recovery device 15 is heated by the exhaust gas EG. The heat medium supplied from the outside to the second heat recovery device 15 in the present embodiment is, for example, water (water supply to the heat recovery steam generator 11). The exhaust gas EG that has finished heat exchange in the second heat recovery device 15 flows out to the exhaust gas flow path 12 on the downstream side of the second heat recovery device 15. The heat medium heated in the second heat recovery device 15 is used as a heat source in an external device.

### (Carbon Dioxide Recovery Device)

The carbon dioxide recovery device 16 recovers carbon dioxide from the exhaust gas EG flowing through the exhaust gas flow path 12. The carbon dioxide recovery device 16 according to this embodiment recovers carbon dioxide by a wet chemical absorption method. The exhaust gas EG flowing out from the second heat recovery device 15 flows into the carbon dioxide recovery device 16 through the exhaust gas flow path 12. The carbon dioxide recovery device 16 is connected to the heat recovery steam generator 11 via the exhaust gas flow path 12. The carbon dioxide recovery device 16 according to this embodiment includes a cooling tower 161, an absorption tower 162, and a regeneration tower 163.

The cooling tower 161 is a device that cools the exhaust gas EG from the second heat recovery device 15. Although the details are not illustrated, the cooling tower 161 in the present embodiment includes a circulation line that circulates cooling tower circulating water, a pump, and a heat exchanger that cools the cooling tower circulating water by performing heat exchange with cooling water introduced from the outside, and cools the exhaust gas EG by bringing the cooling tower circulating water cooled with the cooling water into contact with the exhaust gas EG. That is, the exhaust gas EG that has flowed into the cooling tower 161 is cooled by being subjected to heat exchange with the cooling tower circulating water. The cooled exhaust gas EG in the cooling tower 161 is guided to the absorption tower 162.

The absorption tower 162 is a device that removes carbon dioxide from the exhaust gas EG introduced into the carbon dioxide recovery device 16 by using an absorption liquid (amine absorption liquid). The exhaust gas EG from the cooling tower 161 is introduced into the absorption tower 162. Inside the absorption tower 162, the absorption liquid is scattered from the upper part to the lower part. The absorption solution scattered inside the cooling tower 161 is brought into contact with the exhaust gas EG to absorb carbon dioxide in the exhaust gas EG. The exhaust gas EG from which carbon dioxide has been removed inside the absorption tower 162 is sent to the chimney 17 through the outlet flow path 18 connected to the absorption tower 162. The exhaust gas EG sent to the chimney 17 is discharged into the atmosphere. On the other hand, the absorption liquid that has absorbed carbon dioxide is guided to the regeneration tower 163.

The regeneration tower 163 is a device that heats the absorption liquid from the absorption tower 162 and separates carbon dioxide from the absorption liquid. The regeneration tower 163 separates carbon dioxide from the absorption liquid to regenerate the absorption liquid. The regeneration tower 163 according to this embodiment includes a regeneration tower main body 163a and a reboiler 163b. The regeneration tower main body 163a has a filling layer or a tray therein. The absorption liquid in which carbon dioxide has been absorbed is introduced into the space in the inside of the regeneration tower main body 163a from the absorption tower 162 via the absorption liquid supply pipe.

The reboiler 163b is connected to the lower part of the regeneration tower main body 163a, for example, through a pipe. A heat medium for heating the absorption solution is introduced into the reboiler 163b from the outside. The heat medium supplied from the outside to the reboiler 163b in the present embodiment is, for example, steam (main steam). The absorption liquid that has flowed into the inside of the regeneration tower main body 163a is heated by being subjected to heat exchange with the heat medium. The absorption liquid is heated inside the regeneration tower main body 163a, so that carbon dioxide is separated from the absorption liquid. The carbon dioxide separated from the absorption solution is guided to the outside of the carbon dioxide recovery device 16. The absorption liquid from which carbon dioxide has been separated is guided to the absorption tower 162 again. The steam as the heat medium that is cooled by heating the absorption liquid is condensed water. The condensed water is guided to, for example, the power generation system 300.

### (Reducing Agent Supply Portion)

The reducing agent supply portion 19 supplies the reducing agent to the exhaust gas EG that flows on the upstream side of the dust collection facility 14 in the flow direction of the exhaust gas EG. As a result, the reducing agent supply portion 19 adds the reducing agent to the exhaust gas EG. The reducing agent supply portion 19 supplies the reducing agent to the exhaust gas EG flowing through the incinerator 10 or the heat recovery steam generator 11 of the garbage treatment system 200. The reducing agent supply portion 19 according to this embodiment supplies the reducing agent to the exhaust gas EG that flows in the heat recovery steam generator 11. The reducing agent reduces the nitrogen oxides in the exhaust gas EG to remove the nitrogen oxides in the exhaust gas EG. As the reducing agent in the present embodiment, for example, ammonia (NH₃) or the like is employed. The reducing agent supply portion 19 includes a reducing agent supply source 191 and a reducing agent supply line 192.

The reducing agent supply source 191 in the present embodiment is a tank that stores a reducing agent in a liquid state therein. The reducing agent supply line 192 guides the reducing agent stored in the reducing agent supply source 191 into the heat recovery steam generator 11. Therefore, the reducing agent supply line 192 connects the reducing agent supply source 191 and the heat recovery steam generator 11. The reducing agent sent to the heat recovery steam generator 11 through the reducing agent supply line 192 is sprayed to the exhaust gas EG flowing in the heat recovery steam generator 11. For example, a pump or the like (not shown) for sending the reducing agent from the reducing agent supply source 191 to the heat recovery steam generator 11 is disposed in the reducing agent supply line 192.

### (Activated Carbon Supply Portion)

The activated carbon supply portion 20 supplies the reducing agent to the exhaust gas EG that flows on the upstream side of the dust collection facility 14 in the flow direction of the exhaust gas EG. The activated carbon supply portion 20 according to this embodiment supplies the activated carbon to the exhaust gas EG that flows on the downstream side of the first heat recovery device 13 in the exhaust gas flow path 12, for example. The activated carbon adsorbs the mercury contained in the exhaust gas EG. Therefore, the activated carbon is supplied to the exhaust gas EG flowing in the exhaust gas flow path 12, so that the mercury contained in the exhaust gas EG is removed. The activated carbon supply portion 20 includes an activated carbon supply source 201 and an activated carbon supply line 202.

The activated carbon supply source 201 according to this embodiment is a tank that holds powdered or granular activated carbon therein. The activated carbon supply line 202 guides the activated carbon held in the activated carbon supply source 201 to the exhaust gas flow path 12 on the downstream side of the first heat recovery device 13. Therefore, the activated carbon supply line 202 connects the activated carbon supply source 201 to the exhaust gas flow path 12 on the downstream side of the first heat recovery device 13. The activated carbon sent to the exhaust gas flow path 12 through the activated carbon supply line 202 is scattered in the exhaust gas EG flowing in the exhaust gas flow path 12. For example, a blower or the like (not shown) for sending the activated carbon from the reducing agent supply source 191 to the exhaust gas flow path 12 is disposed in the activated carbon supply line 202.

### (Alkaline Powder Supply Portion)

The alkaline powder supply portion 21 supplies the alkaline powder to the exhaust gas EG that flows on the upstream side of the dust collection facility 14 in the flow direction of the exhaust gas EG. As the alkaline powder in the present embodiment, for example, quicklime (Ca(OH)₂) or the like is employed. The alkaline powder supply portion 21 according to this embodiment supplies the alkaline powder to the exhaust gas EG flowing on the downstream side of the first heat recovery device 13 in the exhaust gas flow path 12, for example. In a case where the alkaline powder supplied to the exhaust gas EG is, for example, quicklime, the quicklime becomes calcium sulfate (CaSO₄) by reacting with the sulfur oxides (SOx) contained in the exhaust gas EG. In addition, in a case where the alkaline powder supplied to the exhaust gas EG is, for example, quicklime, the quicklime reacts with hydrogen chloride (HCl) contained in the exhaust gas EG to become calcium chloride (CaCl₂). The alkaline powder supply portion 21 includes an alkaline powder supply source 211 and an alkaline powder supply line 212.

The alkaline powder supply source 211 in the present embodiment is a tank that holds an alkaline powder in a powdered or granular form therein. The alkaline powder supply line 212 guides the alkaline powder held in the alkaline powder supply source 211 to the exhaust gas flow path 12 on the downstream side of the first heat recovery device 13. Therefore, the alkaline powder supply line 212 connects the alkaline powder supply source 211 to the exhaust gas flow path 12 on the downstream side of the first heat recovery device 13. More specifically, the alkaline powder supply line 212 is connected to the exhaust gas flow path 12 on the downstream side of a portion to which the activated carbon supply line 202 is connected in the exhaust gas flow path 12. The alkaline powder sent to the exhaust gas flow path 12 through the alkaline powder supply line 212 is scattered in the exhaust gas EG flowing in the exhaust gas flow path 12. For example, a blower or the like (not shown) for sending the alkaline powder from the alkaline powder supply source 211 to the exhaust gas flow path 12 is disposed in the alkaline powder supply line 212.

### (Alkali Agent Supply Portion)

The alkali agent supply portion 22 supplies the alkali agent into the carbon dioxide recovery device 16. The alkali agent supply portion 22 according to this embodiment supplies the alkali agent to the cooling tower circulating water in the cooling tower 161 of the carbon dioxide recovery device 16. In other words, the alkali agent supply portion 22 adds the alkali agent to the cooling tower circulating water. As the alkali agent in the present embodiment, for example, an aqueous sodium hydroxide solution is employed. Therefore, in a case where the alkali agent supplied to the cooling tower circulating water is an aqueous sodium hydroxide solution, this hydrogen sodium aqueous solution becomes sodium sulfate by reacting with the sulfur oxides contained in the exhaust gas EG, and becomes sodium chloride by reacting with the hydrogen chloride contained in the exhaust gas EG. By supplying the alkali agent to the cooling tower circulating water circulating in the cooling tower 161, the desulfurization and the desalting of the exhaust gas EG are performed. The alkali agent supply portion 22 includes an alkali agent supply source 221 and an alkali agent supply line 222.

The alkali agent supply source 221 in the present embodiment is a tank that holds an alkali agent such as an aqueous sodium hydroxide solution therein. The alkali agent supply line 222 guides the alkali agent held in the alkali agent supply source 221 into the cooling tower 161. Therefore, the alkali agent supply line 222 connects the alkali agent supply source 221 and the cooling tower 161. The alkali agent sent to the cooling tower 161 through the alkali agent supply line 222 is sprayed to the cooling tower circulating water that circulates in the cooling tower 161. For example, a pump or the like (not shown) for sending the alkali agent from the alkali agent supply source 221 to the cooling tower 161 is disposed in the alkali agent supply line 222.

### (Power Generation System)

The power generation system 300 is a system that generates power by using the heat of the exhaust gas EG generated in the garbage treatment system 200. The power generation system 300 includes a steam turbine 31, a condenser 32, a deaerator 34, a first water supply pump 33a, a second water supply pump 33b, a main steam line 30a, a first connection line 30c, a second connection line 30d, a third connection line 30e, a boiler water supply line 30b, a first water supply bypass line 30g, a first heat medium valve 15a, a second water supply bypass line 30h, and a second heat medium valve 13a.

### (Steam Turbine)

The steam turbine 31 is driven by steam from the heat recovery steam generator 11 and is a rotary machine that rotates a generator GEN connected to the steam turbine 31. Steam generated in the heat recovery steam generator 11 is introduced into the steam turbine 31 in the present embodiment through the main steam line 30a. The main steam line 30a connects the steam outlet of the heat recovery steam generator 11 and the steam inlet of the steam turbine 31.

In addition, although not illustrated in Fig. 1, the steam from the heat recovery steam generator 11 that flows through the main steam line 30a is guided to, for example, the reboiler 163b. The steam introduced into the reboiler 163b is used as a heat medium for heating the absorption liquid in the regeneration tower main body 163a. That is, a part of the steam from the heat recovery steam generator 11 can be used as a heat source in the reboiler 163b in the carbon dioxide recovery device 16.

### (Condenser)

The condenser 32 is connected to the steam turbine 31. The steam that has finished the expansion work in the steam turbine 31 is guided into the condenser 32, cooled, and condensed into water (recovered water), and the water is stored in the condenser 32. The water stored in the condenser 32 is guided to the second heat recovery device 15 through the first connection line 30c as a heat medium for performing heat exchange with the exhaust gas EG in the second heat recovery device 15.

Here, the first connection line 30c connects the condenser 32 and the second heat recovery device 15. The first water supply pump 33a is disposed in the first connection line 30c. The first water supply pump 33a is driven to send the water from the condenser 32 to the second heat recovery device 15. The rotation speed of the first water supply pump 33a (the flow rate of water that is pressurized and sent from the condenser 32 to the second heat recovery device 15) in the present embodiment is controlled by the control device 500. Specifically, the first water supply pump 33a receives a signal indicating the rotation speed from the control device 500 through wired or wireless communication. The first water supply pump 33a is rotated based on the rotation speed indicated by the signal, and pressurizes the water in the first connection line 30c to be sent to the second heat recovery device 15.

That is, the first water supply pump 33a can adjust the flow rate of the water flowing through the first connection line 30c by being controlled by the control device 500. The rotation speed of the first water supply pump 33a is adjusted, whereby the flow rate of the water as the heat medium flowing into the second heat recovery device 15 is adjusted.

The water introduced into the second heat recovery device 15 through the first connection line 30c is subjected to heat exchange with the exhaust gas EG in the second heat recovery device 15 and is heated by the exhaust gas EG. The water heated in the second heat recovery device 15 is guided to the deaerator 34 through the second connection line 30d.

One end of the first water supply bypass line 30g is connected to the first connection line 30c, and the other end thereof is connected to the second connection line 30d. Therefore, a part of the water flowing through the first connection line 30c can flow into the first water supply bypass line 30g from one end and can flow into the second connection line 30d through the other end. Therefore, the first water supply bypass line 30g can bypass water from the first connection line 30c to the second connection line 30d without passing through the second heat recovery device 15.

The first heat medium valve 15a is disposed in the first water supply bypass line 30g. The first heat medium valve 15a is a flow regulation valve capable of adjusting a flow rate of water flowing through the first water supply bypass line 30g. The first heat medium valve 15a adjusts the flow rate of the water flowing through the first water supply bypass line 30g by controlling the opening degree. The opening degree of the first heat medium valve 15a according to the present embodiment is controlled by the control device 500. Specifically, the first heat medium valve 15a receives a signal indicating the opening degree from the control device 500 through wired or wireless communication and adjusts the opening degree on the basis of the received signal.

The first heat medium valve 15a can adjust the flow rate of the water flowing through the first water supply bypass line 30g by being controlled by the control device 500. The flow rate of water as the heat medium flowing into the second heat recovery device 15 is adjusted by adjusting the opening degree of the first heat medium valve 15a.

### (Deaerator)

The deaerator 34 heats the water from the second heat recovery device 15 and deaerates the dissolved gas (oxygen, carbon dioxide, or the like) included in the water. Although detailed illustration is omitted, for example, the deaerator 34 is supplied with steam (air-extracted steam) extracted from the steam turbine 31 as a heat source for heating (deaerating) water. The water deaerated by the deaerator 34 is guided to the first heat recovery device 13 through the third connection line 30e. The third connection line 30e connects the water supply outlet of the deaerator 34 to the first heat recovery device. The water introduced into the first heat recovery device 13 through the third connection line 30e is used as a heat medium for performing heat exchange with the exhaust gas EG in the first heat recovery device 13.

The second water supply pump 33b is disposed in the third connection line 30e. The second water supply pump 33b is driven to supply the water from the deaerator 34 to the first heat recovery device 13. The rotation speed of the second water supply pump 33b (the flow rate of water sent from the deaerator 34 to the first heat recovery device 13) in the present embodiment is controlled by the control device 500. Specifically, the second water supply pump 33b receives a signal indicating the rotation speed from the control device 500 through wired or wireless communication. The second water supply pump 33b is rotated based on the rotation speed indicated by the signal, and pressurizes the water in the third connection line 30e to be sent to the first heat recovery device 13.

That is, the second water supply pump 33b can adjust the flow rate of the water flowing through the third connection line 30e by being controlled by the control device 500. The rotation speed of the second water supply pump 33b is adjusted to adjust the flow rate of the water as the heat medium flowing into the first heat recovery device 13.

The water that has finished the heat exchange in the first heat recovery device 13 is guided to the heat recovery steam generator 11 through the boiler water supply line 30b. The boiler water supply line 30b connects the first heat recovery device 13 and the water supply inlet of the heat recovery steam generator 11. The water introduced into the heat recovery steam generator 11 through the boiler water supply line 30b is used as a heat medium for performing heat exchange with the exhaust gas EG in the heat recovery steam generator 11.

The water introduced into the heat recovery steam generator 11 through the boiler water supply line 30b is exchanged with the exhaust gas EG in the heat recovery steam generator 11 and is heated by the exhaust gas EG to become steam (main steam). This steam is guided to the steam turbine 31 through the main steam line 30a.

One end of the second water supply bypass line 30h is connected to the third connection line 30e, and the other end thereof is connected to the boiler water supply line 30b. Therefore, a part of the water flowing through the third connection line 30e can flow into the second water supply bypass line 30h from one end and can flow into the boiler water supply line 30b through the other end. Therefore, the second water supply bypass line 30h can bypass water from the third connection line 30e to the boiler water supply line 30b without passing through the first heat recovery device 13.

The second heat medium valve 13a is disposed in the second water supply bypass line 30h. The second heat medium valve 13a is a flow regulation valve capable of adjusting the flow rate of water flowing through the second water supply bypass line 30h. The second heat medium valve 13a adjusts the flow rate of the water flowing through the second water supply bypass line 30h by controlling the opening degree. The opening degree of the second heat medium valve 13a according to the present embodiment is controlled by the control device 500. Specifically, the second heat medium valve 13a receives a signal indicating the opening degree from the control device 500 through wired or wireless communication and adjusts the opening degree on the basis of the received signal.

The second heat medium valve 13a can adjust the flow rate of the water flowing through the second water supply bypass line 30h by being controlled by the control device 500. The flow rate of water as the heat medium flowing into the first heat recovery device 13 is adjusted by adjusting the opening degree of the second heat medium valve 13a.

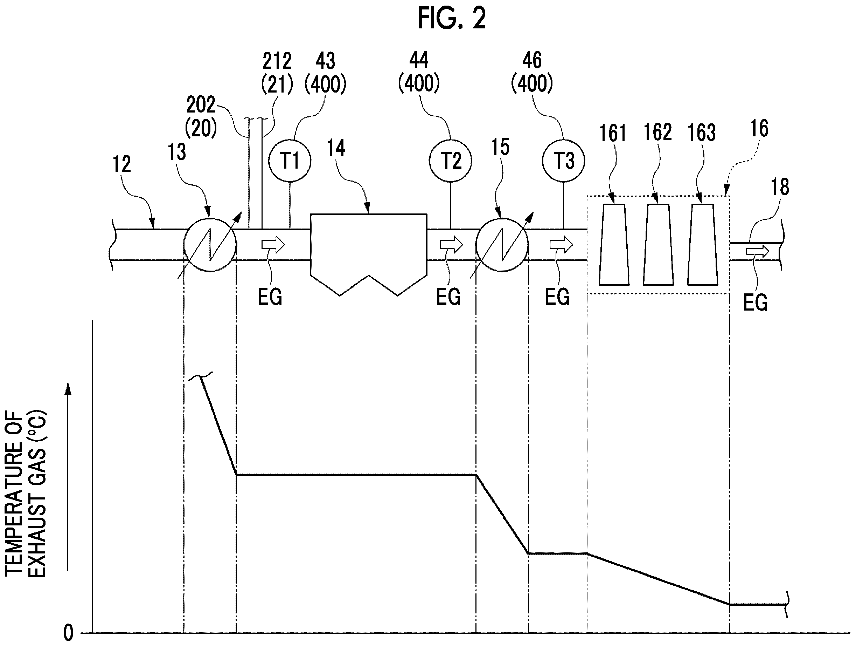

Here, a change in the temperature of the exhaust gas EG flowing through the exhaust gas flow path 12 in the exhaust gas treatment system 100 will be described. As shown in Fig. 2, the exhaust gas EG that flows into the exhaust gas flow path 12 from the heat recovery steam generator 11 flows into the first heat recovery device 13. The exhaust gas EG flowing into the first heat recovery device 13 is cooled by being subjected to heat exchange with water. The temperature of the exhaust gas EG after heat exchange in the first heat recovery device 13 is, for example, 150°C to 230°C. The exhaust gas EG flowing out from the first heat recovery device 13 passes through the dust collection facility 14 and then flows into the second heat recovery device 15. The exhaust gas EG flowing into the second heat recovery device 15 is cooled by being subjected to heat exchange with water. The temperature of the exhaust gas EG after heat exchange in the second heat recovery device 15 is, for example, 70°C to 150°C. The exhaust gas EG flowing out from the second heat recovery device 15 flows into the carbon dioxide recovery device 16. The exhaust gas EG that has flowed into the carbon dioxide recovery device 16 is cooled in the cooling tower 161. The temperature of the exhaust gas EG after being cooled by the cooling tower 161 is, for example, 20°C to 60°C. Therefore, the exhaust gas EG is supplied from the dust collection facility 14 to the carbon dioxide recovery device 16 through the second heat recovery device 15 while maintaining a state equal to or lower than the outlet gas temperature of the dust collection facility 14. The "outlet gas temperature" referred to herein means a temperature of the exhaust gas EG before the exhaust gas flows out from the dust collection facility 14 and flows into the second heat recovery device 15.

### (Sensor)

The sensor 400 is provided in the power generation facility 1000. The sensor 400 according to this embodiment includes a first thermometer 41, a second thermometer 42, a third thermometer 43, a nitrogen oxide concentration detection portion 44, and a sulfur oxide concentration detection portion 45.

### (First Thermometer)

The first thermometer 41 is disposed between the first heat recovery device 13 and the dust collection facility 14 in the exhaust gas flow path 12. In the present embodiment, the first thermometer 41 is disposed on the downstream side of the connection portion with respect to the alkaline powder supply line 212 in the exhaust gas flow path 12. The first thermometer 41 detects the temperature of the exhaust gas EG flowing into the dust collection facility 14. The first thermometer 41 detects the temperature of the exhaust gas EG at predetermined time intervals and transmits a signal indicating the detection result to the control device 500 through wired or wireless communication. Hereinafter, for convenience of description, the temperature of the exhaust gas EG detected by the first thermometer 41 is referred to as a "first temperature T1".

### (Second Thermometer)

The second thermometer 42 is disposed between the dust collection facility 14 and the second heat recovery device 15 in the exhaust gas flow path 12. The second thermometer 42 according to this embodiment detects the temperature of the exhaust gas EG that has flowed out from the dust collection facility 14. In other words, the second thermometer 42 detects the temperature of the exhaust gas EG flowing into the second heat recovery device 15. The second thermometer 42 detects the temperature of the exhaust gas EG at a predetermined time interval and transmits a signal indicating the detection result to the control device 500 through wired or wireless communication. Hereinafter, for convenience of description, the temperature of the exhaust gas EG detected by the second thermometer 42 is referred to as a "second temperature T2". That is, the second temperature T2 is the outlet gas temperature.

### (Third Thermometer)

The third thermometer 43 is disposed between the second heat recovery device 15 and the carbon dioxide recovery device 16 in the exhaust gas flow path 12. The third thermometer 43 according to this embodiment detects the temperature of the exhaust gas EG flowing into from the second heat recovery device 15. In other words, the third thermometer 43 detects the temperature of the exhaust gas EG that flows into the cooling tower 161 of the carbon dioxide recovery device 16. The third thermometer 43 detects the temperature of the exhaust gas EG at a predetermined time interval and transmits a signal indicating the detection result to the control device 500 through wired or wireless communication. Hereinafter, for convenience of description, the temperature of the exhaust gas EG detected by the third thermometer 43 is referred to as a "third temperature T3".

### (Nitrogen Oxide Concentration Detection Portion)

The nitrogen oxide concentration detection portion 44 is a nitrogen oxide sensor (NOx sensor) capable of detecting the nitrogen oxide concentration A1 of the exhaust gas EG. The nitrogen oxide concentration detection portion 44 according to this embodiment is disposed between the dust collection facility 14 and the second heat recovery device 15 in the exhaust gas flow path 12. Therefore, the nitrogen oxide concentration detection portion 44 detects the nitrogen oxide concentration A1 of the exhaust gas EG that has flowed out from the dust collection facility 14. In other words, the nitrogen oxide concentration detection portion 44 detects the concentration of the nitrogen oxide contained in the exhaust gas EG flowing into the second heat recovery device 15. The nitrogen oxide concentration detection portion 44 detects the nitrogen oxide concentration A1 of the exhaust gas EG at a predetermined time interval, and transmits a signal indicating the detection result to the control device 500 by wired or wireless communication.

### (Sulfur Oxide Concentration Detection Portion)

The sulfur oxide concentration detection portion 45 is a sulfur oxide sensor (SOx sensor) capable of detecting the sulfur oxide concentration A2 of the exhaust gas EG. The sulfur oxide concentration detection portion 45 according to this embodiment is disposed between the dust collection facility 14 and the second heat recovery device 15 in the exhaust gas flow path 12. Therefore, the sulfur oxide concentration detection portion 45 detects the sulfur oxide concentration A2 of the exhaust gas EG that has flowed out from the dust collection facility 14. In other words, the sulfur oxide concentration detection portion 45 detects the concentration of the sulfur oxide contained in the exhaust gas EG flowing into the second heat recovery device 15. The sulfur oxide concentration detection portion 45 detects the sulfur oxide concentration A2 of the exhaust gas EG at a predetermined time interval, and transmits a signal indicating the detection result to the control device 500 by wired or wireless communication.

### (Control Device)

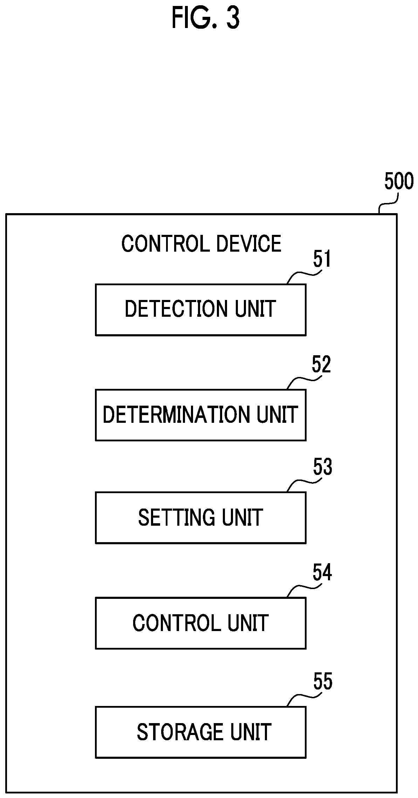

The control device 500 receives the signal indicating the detection result from the sensor 400 and controls the amount of the heat medium supplied to the first heat recovery device 13 and the amount of the heat medium supplied to the second heat recovery device 15. As shown in Fig. 3, the control device 500 according to the present embodiment includes a detection unit 51, a determination unit 52, a setting unit 53, a control unit 54, and a storage unit 55. The storage unit 55 stores information used by the determination unit 52 in the determination processing.

### (Detection Unit)

The detection unit 51 receives the signal from the sensor 400 to acquire the detection result of the sensor 400.

By receiving the signal transmitted from the first thermometer 41, the detection unit 51 acquires the first temperature T1 indicated by the signal. The detection unit 51 transmits the acquired first temperature T1 to the determination unit 52. The detection unit 51 acquires the second temperature T2 indicated by the signal transmitted from the second thermometer 42 by receiving the signal. The detection unit 51 transmits the acquired second temperature T2 to the determination unit 52. The detection unit 51 receives the signal transmitted from the third thermometer 43 to acquire the third temperature T3 indicated by the signal. The detection unit 51 transmits the acquired third temperature T3 to the determination unit 52.

In addition, the detection unit 51 receives the signal transmitted from the nitrogen oxide concentration detection portion 44 to acquire the nitrogen oxide concentration A1 indicated by the signal. The detection unit 51 transmits the acquired nitrogen oxide concentration A1 to the setting unit 53. The detection unit 51 receives the signal transmitted from the sulfur oxide concentration detection portion 45 to acquire the sulfur oxide concentration A2 indicated by the signal. Then, the detection unit 51 transmits the acquired sulfur oxide concentration A2 to the determination unit 52.

### (Determination Unit)

The determination unit 52 performs determination processing on the basis of the detection result of the sensor 400 received from the detection unit 51. In a case where the first temperature T1 and the second temperature T2 are received from the detection unit 51, the determination unit 52 compares the first temperature T1 and the second temperature T2 with a predetermined gas temperature threshold value Tx. The gas temperature threshold value Tx in the present embodiment is, for example, a temperature preset by the setting unit 53. The gas temperature threshold value Tx is, for example, a value in a temperature range of 150°C to 230°C. The temperature is preferably 180°C to 220°C.

The determination unit 52 determines that "the adjustment of the first temperature T1 is necessary" in a case where the first temperature T1 deviates from the gas temperature threshold value Tx. The case where the first temperature T1 deviates from the gas temperature threshold value Tx means a case where the first temperature T1 is, for example, out of the temperature range indicated by the gas temperature threshold value Tx. In addition, a case where the first temperature T1 is not deviated from the gas temperature threshold value Tx means a case where the first temperature T1 is, for example, within the temperature range indicated by the gas temperature threshold value Tx.

Further, in a case where the first temperature T1 is higher than the upper limit value of the temperature range indicated by the gas temperature threshold value Tx, the determination unit 52 determines that "the first temperature T1 is high". In addition, the determination unit 52 determines that "the first temperature T1 is low" in a case where the first temperature T1 is lower than the lower limit value of the temperature range indicated by the gas temperature threshold value Tx.

In a case where the second temperature T2 deviates from the gas temperature threshold value Tx, the determination unit 52 determines that "the adjustment of the second temperature T2 is necessary". The case where the second temperature T2 deviates from the gas temperature threshold value Tx means that the second temperature T2 is, for example, out of the temperature range indicated by the gas temperature threshold value Tx. In addition, a case where the second temperature T2 is not deviated from the gas temperature threshold value Tx means a case where the second temperature T2 is, for example, within the temperature range indicated by the gas temperature threshold value Tx.

Further, in a case where the second temperature T2 is higher than the upper limit value of the temperature range indicated by the gas temperature threshold value Tx, the determination unit 52 determines that "the second temperature T2 is high". In addition, the determination unit 52 determines that "the second temperature T2 is low" in a case where the second temperature T2 is lower than the lower limit value of the temperature range indicated by the gas temperature threshold value Tx.

On the other hand, the determination unit 52 determines that "the adjustment of the first temperature T1 is not necessary" in a case where the first temperature T1 is not deviated from the gas temperature threshold value Tx. In addition, the determination unit 52 determines that "the adjustment of the second temperature T2 is not necessary" in a case where the second temperature T2 is not deviated from the gas temperature threshold value Tx. The gas temperature threshold value Tx is stored by, for example, the storage unit 55.

In addition, in a case where the determination unit 52 receives the third temperature T3 from the detection unit 51, the determination unit 52 compares the third temperature T3 with a predetermined gas temperature threshold value Ty. The gas temperature threshold value Ty in the present embodiment is, for example, a temperature range preset in accordance with the power generation facility 1000.

The determination unit 52 determines that "the adjustment of the third temperature T3 is necessary" in a case where the third temperature T3 deviates from the gas temperature threshold value Ty. The case where the third temperature T3 deviates from the gas temperature threshold value Ty means that the third temperature T3 is, for example, out of the temperature range indicated by the gas temperature threshold value Ty. In addition, a case where the third temperature T3 is not deviated from the gas temperature threshold value Ty means a case where the third temperature T3 is, for example, within the temperature range indicated by the gas temperature threshold value Ty.

Further, in a case where the third temperature T3 is higher than the upper limit value of the temperature range indicated by the gas temperature threshold value Ty, the determination unit 52 determines that "the third temperature T3 is high". In addition, the determination unit 52 determines that "the third temperature T3 is low" in a case where the third temperature T3 is lower than the lower limit value of the temperature range indicated by the gas temperature threshold value Ty.

On the other hand, the determination unit 52 determines that "the adjustment of the third temperature T3 is not necessary" in a case where the third temperature T3 does not deviate from the gas temperature threshold value Ty. The gas temperature threshold value Ty is stored in advance, for example, by the storage unit 55.

### (Setting Unit)

The setting unit 53 sets the gas temperature threshold value Tx on the basis of the detection result of the sensor 400 received from the detection unit 51. In a case where the nitrogen oxide concentration A1 and the sulfur oxide concentration A2 are received from the detection unit 51, the setting unit 53 acquires the gas temperature threshold value Tx in accordance with one or more of the nitrogen oxide concentration A1 and the sulfur oxide concentration A2 by referring to predetermined correspondence relationship information associated with the gas temperature threshold value Tx to be set.

The setting unit 53 stores the acquired gas temperature threshold value Tx in the storage unit 55. The correspondence relationship information in the present embodiment is, for example, a table in which one or more of the nitrogen oxide concentration A1, the sulfur oxide concentration A2, and the gas temperature threshold value Tx are associated with each other. The correspondence relationship information may be a function or the like that takes one or more of the nitrogen oxide concentration A1 and the sulfur oxide concentration A2 as an argument and returns the gas temperature threshold value Tx as a return value. The correspondence relationship information is stored in advance, for example, by the storage unit 55.

### (Control Unit)

The control unit 54 controls the amount of the heat medium supplied to the first heat recovery device 13 and the amount of the heat medium supplied to the second heat recovery device 15 based on the determination result by the determination unit 52.

The control unit 54 controls the amount of the heat medium supplied to the first heat recovery device 13 in a case where the determination unit 52 determines that "the adjustment of the first temperature T1 is necessary" or "the adjustment of the second temperature T2 is necessary". Specifically, in a case where the determination unit 52 determines that "the first temperature T1 is high" or in a case where the determination unit 52 determines that "the second temperature T2 is high", the control unit 54 transmits a signal indicating an increase in the opening degree to the second heat medium valve 13a. In addition, in a case where the determination unit 52 determines that "the first temperature T1 is low" or determines that "the second temperature T2 is low", the control unit 54 transmits a signal indicating a decrease in the opening degree to the second heat medium valve 13a. On the other hand, in a case where the determination unit 52 determines that "the adjustment of the first temperature T1 is not necessary" and "the adjustment of the second temperature T2 is not necessary", the control unit 54 transmits a signal indicating the maintenance of the opening degree to the second heat medium valve 13a. The amount of the heat medium introduced into the first heat recovery device 13 is controlled by the operation of the control unit 54.

In addition, in a case where the determination unit 52 determines that "the adjustment of the third temperature T3 is necessary", the control unit 54 controls the amount of the heat medium supplied to the second heat recovery device 15. Specifically, in a case where the determination unit 52 determines that "the third temperature T3 is high", the control unit 54 transmits a signal indicating an increase in the opening degree to the first heat medium valve 15a. In addition, in a case where the determination unit 52 determines that "the third temperature T3 is low", the control unit 54 transmits a signal indicating the decrease in the opening degree to the first heat medium valve 15a. On the other hand, in a case where the determination unit 52 determines that "the adjustment of the third temperature T3 is not necessary", the control unit 54 transmits a signal indicating the maintenance of the opening degree to the first heat medium valve 15a. The amount of the heat medium introduced into the first heat recovery device 13 is controlled by these operations by the control unit 54.

### (Operation of Control Device)

Subsequently, an operation of the control device 500 according to the present embodiment will be described.

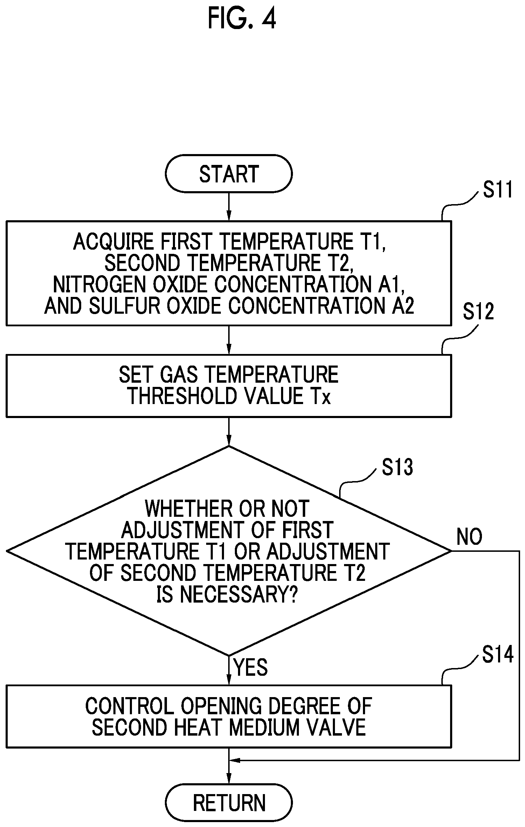

Hereinafter, with reference to Fig. 4, an example of the operation of the control device 500 that controls the amount of the heat medium supplied to the first heat recovery device 13 will be described.

The detection unit 51 acquires the first temperature T1, the second temperature T2, the nitrogen oxide concentration A1, and the sulfur oxide concentration A2 (step S11). Next, the setting unit 53 sets the gas temperature threshold value Tx (step S12) on the basis of one or more of the nitrogen oxide concentration A1 and the sulfur oxide concentration A2 acquired by the detection unit 51. Next, the determination unit 52 determines whether or not the adjustment of the first temperature T1 is necessary or whether or not the adjustment of the second temperature T2 is necessary, on the basis of the acquired first temperature T1 and second temperature T2 (step S13). In a case where the determination unit 52 determines that the adjustment of the first temperature T1 is necessary or the adjustment of the second temperature T2 is necessary (step S13: YES), the control unit 54 controls the opening degree of the second heat medium valve 13a (step S14). In a case where the processing of step S14 is finished, the processing of step S11 is performed again. In a case where the determination unit 52 determines that the adjustment of the first temperature T1 is not necessary and the adjustment of the second temperature T2 is not necessary (step S13: NO), the processing of step S11 is performed again.

The processes of steps S11 to S14 described above are repeatedly executed in the operation stage of the exhaust gas treatment system 100.

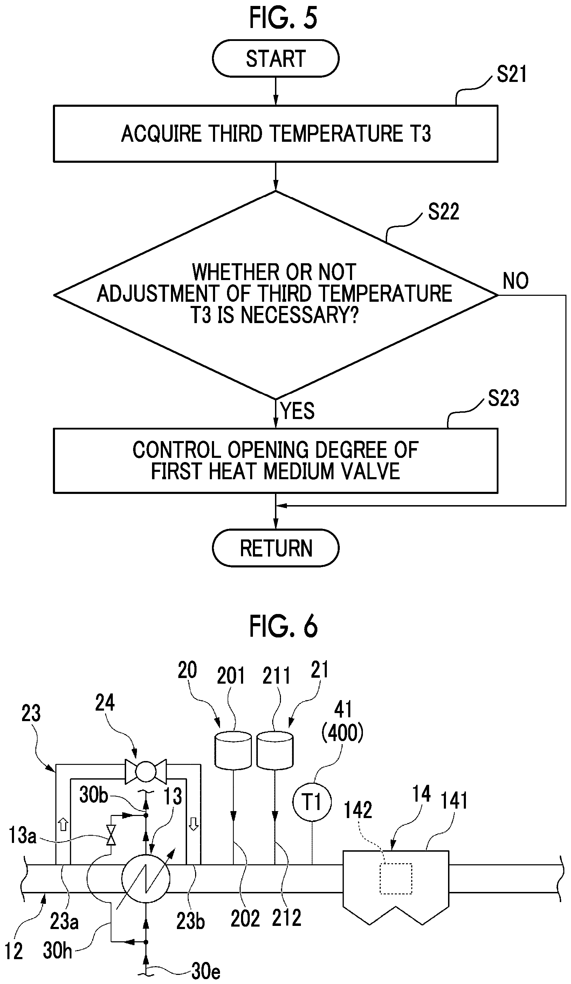

Hereinafter, with reference to Fig. 5, an example of the operation of the control device 500 that controls the amount of the heat medium supplied to the second heat recovery device 15 will be described.

The detection unit 51 acquires the third temperature T3 (step S21). Next, the determination unit 52 determines whether or not the adjustment of the third temperature T3 is necessary, on the basis of the acquired third temperature T3 (step S22). In a case where the determination unit 52 determines that the adjustment of the third temperature T3 is necessary (step S22: YES), the control unit 54 controls the opening degree of the first heat medium valve 15a (step S23). In a case where the processing of step S23 is finished, the processing of step S21 is performed again. In a case where the determination unit 52 determines that the adjustment of the third temperature T3 is not necessary (step S22: NO), the processing of step S21 is performed again.

The processes of steps S21 to S23 described above are repeatedly executed in the operation stage of the exhaust gas treatment system 100.

### (Exhaust Gas Treatment Method)

Subsequently, an exhaust gas treatment method used in the power generation facility 1000 will be described. The exhaust gas treatment method includes supplying the carbon dioxide recovery device 16 with the exhaust gas from the dust collection facility 14 while maintaining the state where the temperature of the exhaust gas at the outlet of the dust collection facility 14 is equal to or lower than the outlet gas temperature. The exhaust gas treatment method executes a heat exchange step.

In the heat exchange step, the control device 500 controls the amount of the heat medium flowing into the second heat recovery device 15 based on the detection result of the sensor 400 disposed in the exhaust gas flow path 12. Specifically, the determination unit 52 of the control device 500 determines whether or not the adjustment of the third temperature T3 is necessary on the basis of the third temperature T3 from the third thermometer 43 acquired by the acquisition unit of the control device 500. The control unit 54 of the control device 500 controls the opening degree of the first heat medium valve 15a based on the determination result of the determination unit 52. As a result, the temperature of the exhaust gas EG passing through the dust collection facility 14 is cooled by heat exchange in the second heat recovery device 15. Therefore, the exhaust gas EG is supplied to the carbon dioxide recovery device 16 while maintaining a state equal to or lower than the outlet gas temperature of the dust collection facility 14.

### (Operations and Effects)

According to the configuration of the above-described exhaust gas treatment system, the denitration layer 142 on which the denitration catalyst is supported denitrates the exhaust gas EG passing through the dust collection facility 14. The denitrified exhaust gas EG is supplied to the carbon dioxide recovery device 16 while maintaining the exhaust gas temperature equal to or lower than the temperature at the time of flowing out from the dust collection facility 14. That is, the exhaust gas EG is denitrated by the dust collection facility 14, and thus does not need to be heated in the process from the dust collection facility 14 to the carbon dioxide recovery device 16. Therefore, it is possible to reduce the thermal energy required for the heating. As a result, in a case where the treatment of the exhaust gas is insufficient, the amount of impurities such as sulfur oxides contained in the exhaust gas may increase. According to the above configuration, since the denitration layer 142 of the dust collection facility 14 on the upstream side of the carbon dioxide recovery device 16 removes the sulfur oxides in the exhaust gas EG, it is possible to suppress an increase in the consumption of the absorption liquid in which the impurities are absorbed by the carbon dioxide recovery device 16.

In addition, in the above configuration, a part of the steam from the heat recovery steam generator 11 that flows through the main steam line 30a can be used as a heat source in the reboiler 163b in the carbon dioxide recovery device 16. Accordingly, it is possible to suppress the decrease in the power generation efficiency in the power generation facility 1000 even in a case where the carbon dioxide recovery device 16 is introduced into the exhaust gas treatment system 100.

In addition, in the above configuration, the amount of the heat medium supplied to the first heat recovery device 13 positioned on the upstream side of the dust collection facility 14 in the flow direction of the exhaust gas EG is controlled on the basis of the comparison between the detection result of one or more of the first thermometer 41 and the second thermometer 42 and the gas temperature threshold value Tx. Accordingly, it is possible to stabilize the temperature of the exhaust gas EG introduced into the dust collection facility 14. Therefore, the denitration performance of the exhaust gas EG in the dust collection facility 14 can be stabilized. It is possible to suppress the inflow or accumulation of impurities in the absorption liquid in the carbon dioxide recovery device 16.

In addition, in the above configuration, the temperature of the exhaust gas EG passing through the dust collection facility 14 is adjusted to a temperature corresponding to one or more of the nitrogen oxide concentration A1 and the sulfur oxide concentration A2. Therefore, for example, in a case where the nitrogen oxide concentration A1 and the sulfur oxide concentration A2 are high, the temperature of the exhaust gas EG passing through the dust collection facility 14 is controlled to increase, and in a case where the nitrogen oxide concentration A1 and the sulfur oxide concentration A2 are low, the temperature of the exhaust gas EG passing through the dust collection facility 14 is controlled to decrease. As a result, it is possible to optimize the magnitude of the motive power used in the exhaust gas treatment system 100.

In addition, with the above configuration, the heat of the exhaust gas EG passing through the dust collection facility 14 is recovered by the second heat recovery device 15. In this case, the flow rate of the heat medium supplied to the first heat recovery device 13 is set to the temperature of the discharged exhaust gas corresponding to one or more of the nitrogen oxide concentration A1 and the sulfur oxide concentration A2, and the flow rate of the heat medium supplied to the second heat recovery device 15 is set based on the third temperature T3. Accordingly, it is possible to further stabilize the temperature of the exhaust gas EG from the second heat recovery device 15 to the carbon dioxide recovery device 16 in the exhaust gas flow path 12. Therefore, it is possible to improve the denitration performance of the exhaust gas EG in the denitration layer 142 of the dust collection facility 14 with suppressing the deterioration of the power generation efficiency.

In addition, in the above configuration, the amount of the heat medium supplied to the second heat recovery device 15 is controlled on the basis of the comparison between the detection result of the third thermometer 43 and the gas temperature threshold value Ty. As a result, the amount of heat recovered from the exhaust gas EG can be stabilized. In addition, the temperature of the exhaust gas EG flowing into the carbon dioxide recovery device 16 can be stabilized.

In addition, in the above configuration, the reducing agent is supplied to the exhaust gas EG before flowing into the dust collection facility 14. The reducing agent supplied to the exhaust gas EG directly reacts with the nitrogen oxide in the exhaust gas EG to remove the nitrogen oxide. In addition, the reducing agent supplied to the exhaust gas EG also passes through the dust collection facility 14 together with the exhaust gas EG. In this case, the reducing agent comes into contact with the denitration catalyst of the denitration layer 142, and the nitrogen oxides are removed by the catalytic action of the denitration layer 142 of the dust collection facility 14. That is, the denitration catalyst is regenerated by the action of the reducing agent on the denitration catalyst. As a result of these actions, it is possible to suppress the decrease in the denitration efficiency in the dust collection facility 14.

In addition, in the above configuration, the activated carbon is supplied to the exhaust gas EG before flowing into the dust collection facility 14. As a result, impurities such as mercury contained in the exhaust gas EG are adsorbed on the activated carbon. Therefore, it is possible to suppress the residual impurities such as mercury in the exhaust gas EG passing through the dust collection facility 14, and as a result, it is possible to suppress the inflow of impurities into the absorption liquid in the carbon dioxide recovery device 16. Therefore, it is possible to reduce the impurities mixed into the carbon dioxide recovered by the carbon dioxide recovery device 16 and the deterioration of the absorption liquid.

In addition, in the above configuration, the alkaline powder is supplied to the exhaust gas EG before flowing into the dust collection facility 14. As a result, the sulfur oxides contained in the exhaust gas EG react with the quicklime as the alkaline powder to form calcium sulfate. Therefore, it is possible to suppress the sulfur oxides contained in the exhaust gas EG from coming into contact with the denitration catalyst in the dust collection facility 14. As a result, it is possible to suppress the poisoning of the denitration catalyst. In addition, by removing the sulfur oxide on the upstream side of the carbon dioxide recovery device 16, the supply amount of the alkali agent to be supplied to the cooling tower 161 in the carbon dioxide recovery device 16 can be reduced.

In addition, in the above configuration, the sulfur oxides and the hydrogen chloride contained in the exhaust gas EG in the cooling tower 161 of the carbon dioxide recovery device 16 react with the alkali agent supplied to the cooling tower circulating water by the alkali agent supply portion 22. As a result, the desulfurization and desalting of the exhaust gas EG in the cooling tower 161 are performed. Since the desulfurization and desalting of the exhaust gas EG can be performed in the cooling tower 161, the amount of the agent (alkaline powder such as quicklime or sodium hydrogen carbonate) sprayed on the upstream side of the dust collection facility 14, which is the catalyst-supported bag filter, can be reduced. As a result, the amount of discharged solid waste can be reduced. In addition, the amount of the drug to be sprayed is reduced, so that the increase in the differential pressure in the catalyst-supported bag filter is reduced and the backwashing interval is extended. As a result, the service life of the catalyst-supported bag filter can be extended.

### [Second Embodiment]

Hereinafter, the power generation facility 1000 according to a second embodiment of the present disclosure will be described. The exhaust gas treatment system 100 and the power generation system 300 described in the second embodiment have configurations partially different from the exhaust gas treatment system 100 and the power generation system 300 described in the first embodiment. The same components as those in the first embodiment will be designated by the same reference numerals and will not be described in detail. The exhaust gas treatment system 100 according to the second embodiment further includes a bypass line 23 and a flow rate adjuster 24 with respect to the exhaust gas treatment system 100 described in the first embodiment.

### (Exhaust Gas Treatment System)

As shown in Fig. 6, the exhaust gas treatment system 100 in the present embodiment includes the exhaust gas flow path 12, the first heat recovery device 13, the dust collection facility 14, the second heat recovery device 15, the carbon dioxide recovery device 16, the reducing agent supply portion 19, the activated carbon supply portion 20, the alkaline powder supply portion 21, the alkali agent supply portion 22, the chimney 17, the outlet flow path 18, the bypass line 23, and the flow rate adjuster 24.

### (Bypass Line)

One end 23a of the bypass line 23 is connected to the exhaust gas flow path 12 between the heat recovery steam generator 11 and the first heat recovery device 13, and the other end 23b is connected to the exhaust gas flow path 12 between the first heat recovery device 13 and the dust collection facility 14. Therefore, a part of the exhaust gas EG flowing through the exhaust gas flow path 12 can flow into the bypass line 23 from the one end 23a and can flow into the exhaust gas flow path 12 again through the other end 23b. In other words, the bypass line 23 can join at least a part of the exhaust gas EG that flows into the first heat recovery device 13 to the exhaust gas EG that flows between the first heat recovery device 13 and the dust collection facility 14 without passing through the first heat recovery device 13 (can be bypassed). One end 23a of the bypass line 23 is disposed between the heat recovery steam generator 11 and the first heat recovery device 13 in the exhaust gas flow path 12. The other end 23b of the bypass line 23 is disposed on the first heat recovery device 13 side which is the upstream side with respect to the connection portion with the activated carbon supply line 202 in the exhaust gas flow path 12.

### (Flow Rate Adjuster)

The flow rate adjuster 24 is disposed in the bypass line 23. Here, the "in the bypass line 23" means "in the middle of the bypass line 23" instead of "inside the bypass line 23". The flow rate adjuster 24 is a flow regulation valve capable of adjusting the flow rate of the exhaust gas EG flowing through the bypass line 23 by adjusting the opening degree. The opening degree of the flow rate adjuster 24 in the present embodiment is controlled by the control device 500. Specifically, the flow rate adjuster 24 receives a signal indicating the opening degree from the control device 500 through wired or wireless communication. The flow rate adjuster 24 adjusts the flow rate of the exhaust gas EG flowing through the bypass line 23 based on the opening degree indicated by the signal.

### (Control Device)

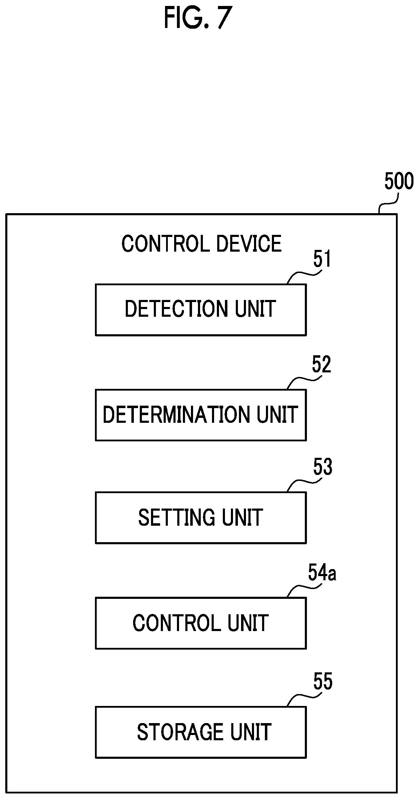

As shown in Fig. 7, the control device 500 according to the present embodiment includes a detection unit 51, a determination unit 52, a setting unit 53, a control unit 54a, and a storage unit 55.

The control unit 54a controls the opening degree of the flow rate adjuster 24 in a case where the determination unit 52 determines that "the adjustment of the first temperature T1 is necessary" or "the adjustment of the second temperature T2 is necessary". Specifically, in a case where the determination unit 52 determines that "the first temperature T1 is high" or "the second temperature T2 is high", the control unit 54a transmits a signal indicating a decrease in the opening degree to the flow rate adjuster 24. In addition, in a case where the determination unit 52 determines that the "first temperature T1 is low" or the "second temperature T2 is low", the control unit 54a transmits a signal indicating an increase in the opening degree to the flow rate adjuster 24. That is, at the same time as the flow rate of the exhaust gas EG flowing through the bypass line 23 is adjusted, the flow rate of the exhaust gas EG flowing into the first heat recovery device 13 is controlled. On the other hand, in a case where the determination unit 52 determines that "the adjustment of the first temperature T1 is not necessary" and "the adjustment of the second temperature T2 is not necessary", the control unit 54a transmits a signal indicating the maintenance of the opening degree to the flow rate adjuster 24. The amount of the heat medium introduced into the first heat recovery device 13 is controlled by the operation of the control unit 54a.

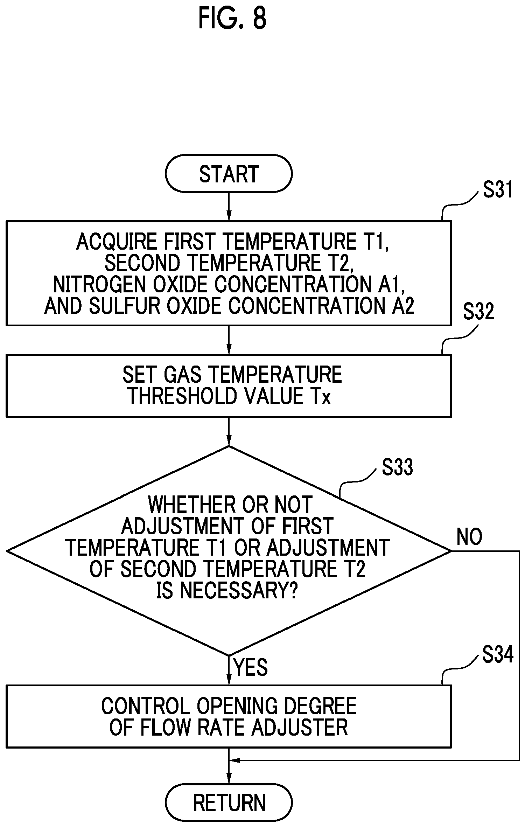

Hereinafter, with reference to Fig. 8, an example of the operation of the control device 500 that controls the amount of the heat medium supplied to the first heat recovery device 13 will be described.

The detection unit 51 acquires the first temperature T1, the second temperature T2, the nitrogen oxide concentration A1, and the sulfur oxide concentration A2 (step S31). Next, the setting unit 53 sets the gas temperature threshold value Tx on the basis of one or more of the nitrogen oxide concentration A1 and the sulfur oxide concentration A2 acquired by the detection unit 51 (step S32). Next, the determination unit 52 determines whether or not the adjustment of the first temperature T1 is necessary or whether or not the adjustment of the second temperature T2 is necessary, on the basis of the acquired first temperature T1 and second temperature T2 (step S33). In a case where the determination unit 52 determines that the adjustment of the first temperature T1 is necessary or the adjustment of the second temperature T2 is necessary (step S33: YES), the control unit 54a controls the opening degree of the flow rate adjuster 24 (step S34). In a case where the processing of step S34 is finished, the processing of step S31 is performed again. In a case where the determination unit 52 determines that the adjustment of the first temperature T1 is not necessary and the adjustment of the second temperature T2 is not necessary (NO in step S33), the processing of step S31 is performed again.

The processes of steps S31 to S34 described above are repeatedly executed in the operation stage of the exhaust gas treatment system 100.

### (Operations and Effects)

In the configuration of the second embodiment, the amount of the exhaust gas EG supplied to the first heat recovery device 13 positioned on the upstream side of the dust collection facility 14 in the flow direction of the exhaust gas EG is controlled on the basis of the comparison between the detection result of one or more of the first thermometer 41 and the second thermometer 42 and the gas temperature threshold value Tx. Accordingly, it is possible to stabilize the temperature of the exhaust gas EG introduced into the dust collection facility 14. Therefore, the denitration performance of the exhaust gas EG in the dust collection facility 14 can be stabilized.

### [Third Embodiment]

Hereinafter, a power generation facility 1000 according to a third embodiment of the present disclosure will be described. The power generation facility 1000 described in the third embodiment has a partially different configuration from the power generation facility 1000 described in the first embodiment. The same components as those in the first embodiment will be designated by the same reference numerals and will not be described in detail. In the third embodiment, the carbon dioxide recovery device 16 in the exhaust gas treatment system 100 further includes a reclaimer 164 with respect to the carbon dioxide recovery device 16 described in the first embodiment. The exhaust gas treatment system 100 in the third embodiment further includes a reducing agent introduction line 25 with respect to the exhaust gas treatment system 100 described in the first embodiment.

### (Exhaust Gas Treatment System)

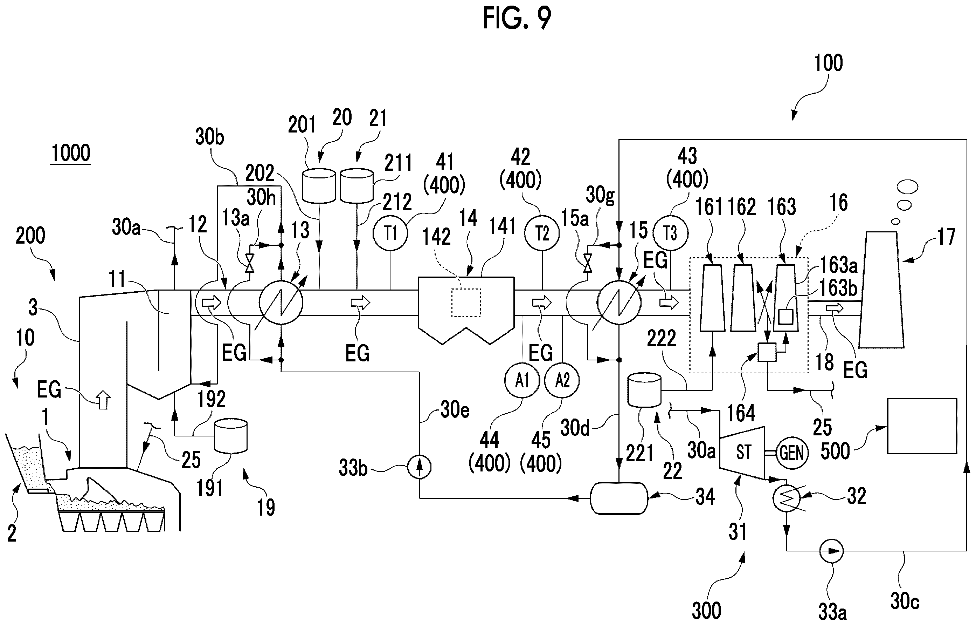

As shown in Fig. 9, the exhaust gas treatment system 100 in the present embodiment includes the exhaust gas flow path 12, the first heat recovery device 13, the dust collection facility 14, the second heat recovery device 15, the carbon dioxide recovery device 16, the reducing agent supply portion 19, the activated carbon supply portion 20, the alkaline powder supply portion 21, the alkali agent supply portion 22, the chimney 17, the outlet flow path 18, and the reducing agent introduction line 25.

### (Carbon Dioxide Recovery Device)

The carbon dioxide recovery device 16 according to this embodiment includes a cooling tower 161, an absorption tower 162, a regeneration tower 163, and a reclaimer 164.

The reclaimer 164 is a device that separates the first liquid in which carbon dioxide is separated and concentrated and the second liquid in which impurities are separated from the absorption liquid, and receives a part of the absorption liquid from the regeneration tower 163 that separates carbon dioxide and guides the absorption liquid to the absorption tower 162. The first liquid is a discharge liquid discharged from the carbon dioxide recovery device 16. The first liquid contains an amine. The reclaimer 164 is connected to the reducing agent introduction line 25 that is connected to the heat recovery steam generator 11. The first liquid separated by the reclaimer 164 is supplied into the furnace main body 1 of the incinerator 10 through the reducing agent introduction line 25, and the second liquid is returned into the regeneration tower 163. Therefore, the reducing agent introduction line 25 connects the reclaimer 164 and the heat recovery steam generator 11.

The first liquid sent to the furnace main body 1 through the reducing agent introduction line 25 is incinerated in the same manner as the object to be incinerated such as the garbage. The amine contained in the first liquid has a reducing action, and is incinerated at the same time as the object to be incinerated, so that the generation of nitrogen oxides is suppressed. That is, the first liquid flowing through the reducing agent introduction line 25 functions as a reducing agent for the nitrogen oxide, and the reducing agent introduction line 25 functions as a reducing agent supply portion 19 that supplies the reducing agent into the furnace main body 1. For example, a pump or the like (not shown) for sending the reducing agent from the reclaimer 164 to the furnace main body 1 of the incinerator 10 is disposed in the reducing agent introduction line 25.

### (Operations and Effects)

According to the above configuration, a part of the absorption liquid from the regeneration tower 163 to the absorption tower 162 is separated into the first liquid and the second liquid by the reclaimer 164, and the separated first liquid is added to the exhaust gas EG in the heat recovery steam generator 11 as a reducing agent. That is, the first liquid which is the drainage from the carbon dioxide recovery device 16 is used as a reducing agent. Therefore, it is possible to reduce the power or the cost required in a case of disposing of the first liquid as a drain. In addition, since the reducing agent introduction line 25 functions as the reducing agent supply portion 19, the amount of the reducing agent handled by the reducing agent supply portion 19 can be reduced.

### (Other Embodiments)

While the embodiments of the present disclosure have been described above in detail with reference to the drawings, specific configurations are not limited to the configurations of each embodiment, and additions, omissions, and substitutions of the configurations and other changes can be made without departing from the concept of the present disclosure.

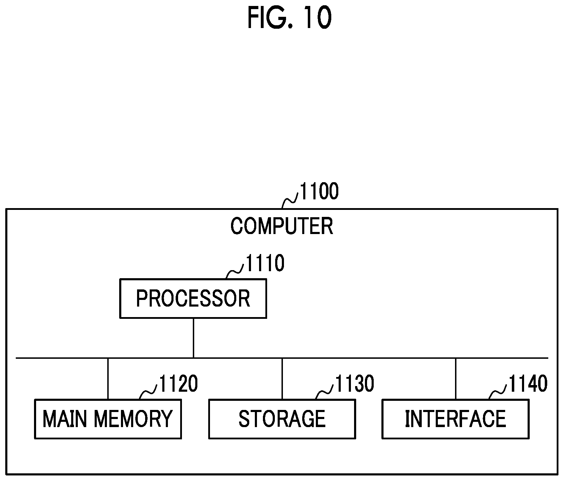

Fig. 10 is a hardware configuration diagram illustrating a configuration of a computer 1100 according to the present embodiment. A computer 1100 includes a processor 1110, a main memory 1120, a storage 1130, and an interface 1140.

The above-described control device 500 is mounted on the computer 1100. An operation of each of the processing units described above is stored in the storage 1130 in a form of a program. The processor 1110 reads the program from the storage 1130, deploys the read program in the main memory 1120, and executes the above-described process in accordance with the program. Further, the processor 1110 ensures a storage area corresponding to each storage unit 55 described above in the main memory 1120 in accordance with the program.

The program may be a program for realizing some of functions fulfilled by the computer 1100. For example, the program may fulfill a function in combination with another program previously stored in the storage 1130, or in combination with another program installed in another device. In addition, the computer 1100 may include a custom large scale integrated circuit (LSI) such as a programmable logic device (PLD) in addition to or in place of the above configuration. Examples of the PLDs include a programmable array logic (PAL), a generic array logic (GAL), a complex programmable logic device (CPLD), and a field-programmable gate array (FPGA). In this case, functions that are realized by the processor 1110 may be partially or entirely realized by the integrated circuit.

As an example of the storage 1130, a magnetic disk, a magneto-optical disk, or a semiconductor memory can be used. The storage 1130 may be an internal medium directly connected to a bus in the computer 1100 or may be an external medium connected to the computer 1100 via the interface 1140 or via a communication line. In addition, when this program is distributed to the computer 1100 via the communication line, the computer 1100 receiving the distributed program may deploy the program in the main memory 1120 to execute the above-described process. In the above-described embodiment, the storage 1130 is a non-transitory tangible storage medium.

In addition, the program may be a program for realizing some of the above-described functions.

In addition, the program may be a so-called difference file (difference program) that realizes the above-described functions in combination with another program previously stored in the storage 1130.

In addition, in the first embodiment, the configuration in which the reducing agent supply portion 19 supplies the reducing agent to the exhaust gas EG flowing in the heat recovery steam generator 11 has been described, but the present disclosure is not limited to this configuration. The reducing agent supply portion 19 may be configured to supply the reducing agent to the exhaust gas EG that flows on the upstream side of the first heat recovery device 13 in the exhaust gas flow path 12. Therefore, in this case, the reducing agent supply line 192 may be connected to the reducing agent supply source 191 and a portion on the upstream side of the first heat recovery device 13 in the exhaust gas flow path 12.

In addition, the gas temperature threshold value Tx described in the first embodiment may be a temperature preset according to the power generation facility 1000. Therefore, in this case, the control device 500 may not include the setting unit 53.

In addition, the configuration of the power generation facility 1000 described in each embodiment is not limited to the independent configuration, and the power generation facility may be configured by appropriately combining the components described in each embodiment.

In addition, the carbon dioxide recovery device 16 is not limited to the configuration in which carbon dioxide is recovered by the wet chemical absorption method. The carbon dioxide recovery device 16 may be configured to recover carbon dioxide by a dry physical absorption method or the like.

In addition, the exhaust gas treatment system 100 in the power generation facility 1000 described in the embodiment may further include a blower (not shown) disposed in the exhaust gas flow path 12 or the outlet flow path 18 between the dust collection facility 14 and the chimney 17.

As a heat exchanger that recovers heat from the exhaust gas EG by performing heat exchange with a heat medium introduced from the outside, the first heat recovery device 13 and the second heat recovery device 15 described in the embodiment are not limited to the configuration. Instead of this configuration, the first heat recovery device 13 and the second heat recovery device 15 may be, for example, a temperature adjuster that adjusts the temperature of the exhaust gas EG by spraying water to the exhaust gas EG.

In addition, in the embodiment, the configuration in which the alkaline powder supply portion 21 supplies quicklime as the alkaline powder to the exhaust gas EG has been described, but the present disclosure is not limited to this configuration. The alkaline powder supply portion 21 may have a configuration in which, for example, sodium hydrogen carbonate or the like is supplied to the exhaust gas EG.

In addition, in the embodiment, the incinerator 10 in the garbage treatment system 200 of the power generation facility 1000 is the stoker type incinerator, but the present invention is not limited to the stoker type incinerator. The incinerator 10 may be, for example, a stoker furnace, a biomass fluidized bed boiler, a sludge incinerator, or the like.

### [Appendix]

The exhaust gas treatment system, the power generation facility including the same, and the exhaust gas treatment method described in each of the embodiments are understood as follows, for example.
(1) An exhaust gas treatment system 100 according to a first aspect, the exhaust gas treatment system 100 including a dust collection facility 14 that includes a denitration layer 142 on which a denitration catalyst is carried and through which exhaust gas EG passes, and a carbon dioxide recovery device 16 that is positioned on a downstream side of the dust collection facility 14 in a flow direction of the exhaust gas EG, in which the exhaust gas EG is supplied from the dust collection facility 14 to the carbon dioxide recovery device 16 while maintaining a state where a temperature of the exhaust gas EG is equal to or lower than a temperature of an outlet gas of the dust collection facility 14.
   Accordingly, the exhaust gas EG is denitrated in the dust collection facility 14, and thus it is not necessary to heat the exhaust gas EG in the process from the dust collection facility 14 to the carbon dioxide recovery device 16. Therefore, it is possible to reduce the thermal energy required for the heating. In addition, since the denitration layer 142 of the dust collection facility 14 on the upstream side of the carbon dioxide recovery device 16 removes sulfur oxides in the exhaust gas EG, it is possible to suppress an increase in the consumption of the absorption liquid in which the impurities are absorbed by the carbon dioxide recovery device 16.
(2) The exhaust gas treatment system 100 according to a second aspect is the exhaust gas treatment system 100 according to the first aspect, further including a first heat recovery device 13 that is positioned on an upstream side of the dust collection facility 14 in the flow direction of the exhaust gas EG and that performs heat exchange between the exhaust gas EG and a heat medium, a sensor 400 that includes one or more of a first thermometer 41 capable of detecting a temperature of the exhaust gas EG flowing between the first heat recovery device 13 and the dust collection facility 14, and a second thermometer 42 capable of detecting a temperature of the exhaust gas EG flowing between the dust collection facility 14 and the carbon dioxide recovery device 16, and a control device 500 that controls an amount of the heat medium supplied to the first heat recovery device 13 based on a detection result of one or more of the first thermometer 41 and the second thermometer 42, and a gas temperature threshold value Tx.
   Accordingly, it is possible to stabilize the temperature of the exhaust gas EG introduced into the dust collection facility 14.
(3) The exhaust gas treatment system 100 according to a third aspect is the exhaust gas treatment system 100 according to the first aspect, further including a first heat recovery device 13 that is positioned on an upstream side of the dust collection facility 14 in the flow direction of the exhaust gas EG and that performs heat exchange between the exhaust gas EG and a heat medium, a bypass line 23 that allows at least a part of the exhaust gas EG flowing into the first heat recovery device 13 to join the exhaust gas EG flowing between the first heat recovery device 13 and the dust collection facility 14 without passing through the first heat recovery device 13, a flow rate adjuster 24 that is disposed in the bypass line 23 and is capable of adjusting a flow rate of the exhaust gas EG flowing through the bypass line 23, a sensor 400 that includes one or more of a first thermometer 41 capable of detecting a temperature of the exhaust gas EG flowing between the first heat recovery device 13 and the dust collection facility 14, and a second thermometer 42 capable of detecting a temperature of the exhaust gas EG flowing between the dust collection facility 14 and the carbon dioxide recovery device 16, and a control device 500 that controls an opening degree of the flow rate adjuster 24 based on a detection result of one or more of the first thermometer 41 and the second thermometer 42, and a gas temperature threshold value Tx.
   Accordingly, it is possible to stabilize the temperature of the exhaust gas EG introduced into the dust collection facility 14.
(4) The exhaust gas treatment system 100 according to a fourth aspect is the exhaust gas treatment system 100 according to the second or third aspect, in which the sensor 400 has one or more of a nitrogen oxide concentration detection portion 44 that is capable of detecting a nitrogen oxide concentration A1 in the exhaust gas EG and a sulfur oxide concentration detection portion 45 that is capable of detecting a sulfur oxide concentration A2 in the exhaust gas EG, and the control device 500 changes the gas temperature threshold value Tx based on a detection result of one or more of the nitrogen oxide concentration detection portion 44 and the sulfur oxide concentration detection portion 45.
   Accordingly, the temperature of the exhaust gas EG is controlled in accordance with one or more of the nitrogen oxide concentration A1 and the sulfur oxide concentration A2. As a result, it is possible to optimize the magnitude of the motive power used in the exhaust gas treatment system 100.
(5) The exhaust gas treatment system 100 according to a fifth aspect is the exhaust gas treatment system 100 according to any one of the first to fourth aspects, further including a second heat recovery device 15 that is positioned between the dust collection facility 14 and the carbon dioxide recovery device 16 in the flow direction of the exhaust gas EG and that performs heat exchange between the exhaust gas EG and the heat medium.
   Accordingly, it is possible to further stabilize the temperature of the exhaust gas EG from the second heat recovery device 15 to the carbon dioxide recovery device 16 in the exhaust gas flow path 12. Therefore, it is possible to improve the denitration performance of the exhaust gas EG in the denitration layer 142 of the dust collection facility 14 with suppressing the deterioration of the power generation efficiency.
(6) The exhaust gas treatment system 100 according to a sixth aspect is the exhaust gas treatment system 100 according to the fifth aspect, further including a sensor 400 that includes a third thermometer 43 capable of detecting a temperature of the exhaust gas EG flowing between the second heat recovery device 15 and the carbon dioxide recovery device 16, and a control device 500 that controls an amount of the heat medium supplied to the second heat recovery device 15 based on a detection result of the sensor 400 and a gas temperature threshold value Ty.
   As a result, the amount of heat recovered from the exhaust gas EG can be stabilized. In addition, the temperature of the exhaust gas EG flowing into the carbon dioxide recovery device 16 can be stabilized.
(7) The exhaust gas treatment system 100 according to a seventh aspect is the exhaust gas treatment system 100 according to any one of the first to sixth aspects, further including a reducing agent supply portion 19 capable of supplying a reducing agent to the exhaust gas EG that flows on an upstream side of the dust collection facility 14 in the flow direction of the exhaust gas EG.
   As a result, the reducing agent supplied to the exhaust gas EG directly reacts with the nitrogen oxide in the exhaust gas EG to remove the nitrogen oxide. In addition, the reducing agent supplied to the exhaust gas EG also passes through the dust collection facility 14 together with the exhaust gas EG. In this case, the reducing agent comes into contact with the denitration catalyst of the denitration layer 142, and the nitrogen oxides are removed by the catalytic action of the denitration layer 142 of the dust collection facility 14. That is, the denitration catalyst is regenerated by the action of the reducing agent on the denitration catalyst.
(8) The exhaust gas treatment system 100 according to an eighth aspect is the exhaust gas treatment system 100 according to any one of the first to seventh aspects, further including an activated carbon supply portion 20 capable of supplying activated carbon to the exhaust gas EG that flows on an upstream side of the dust collection facility 14 in the flow direction of the exhaust gas EG.
   As a result, impurities such as mercury contained in the exhaust gas EG are adsorbed on the activated carbon. Therefore, it is possible to suppress the residual impurities such as mercury in the exhaust gas EG passing through the dust collection facility 14, and as a result, it is possible to suppress the inflow of impurities into the absorption liquid in the carbon dioxide recovery device 16. Therefore, it is possible to reduce the impurities mixed into the carbon dioxide recovered by the carbon dioxide recovery device 16 and the deterioration of the absorption liquid.
(9) The exhaust gas treatment system 100 according to a ninth aspect is the exhaust gas treatment system 100 according to any one of the first to eighth aspects, further including an alkaline powder supply portion 21 capable of supplying an alkaline powder to the exhaust gas EG that flows on an upstream side of the dust collection facility 14 in the flow direction of the exhaust gas EG.
   As a result, the sulfur oxides contained in the exhaust gas EG react with the alkaline powder to form calcium sulfate. Therefore, it is possible to suppress the sulfur oxides contained in the exhaust gas EG from coming into contact with the denitration catalyst in the dust collection facility 14.
(10) The exhaust gas treatment system 100 according to a tenth aspect is the exhaust gas treatment system 100 according to any one of the first to ninth aspects, further including an alkali agent supply portion 22 capable of supplying an alkali agent into the carbon dioxide recovery device 16, in which the carbon dioxide recovery device 16 includes a cooling tower 161 that adds the alkali agent from the alkali agent supply portion 22 to cooling tower circulating water while cooling the exhaust gas EG, an absorption tower 162 that absorbs carbon dioxide included in the cooled exhaust gas EG into an absorption liquid, and a regeneration tower 163 that heats the absorption liquid in which the carbon dioxide has been absorbed by a reboiler 163b to which the heat medium is supplied, and separates the carbon dioxide from the absorption liquid.
   As a result, the desulfurization and desalting of the exhaust gas EG in the cooling tower 161 are performed. Since the desulfurization and desalting can be performed in the cooling tower 161, for example, in a case where an alkaline powder or the like is supplied on the upstream side of the dust collection facility 14, the amount of the alkaline powder can be reduced. In addition, the amount of discharged solid waste can be reduced. In addition, since the amount of the medicine to be sprayed is reduced, the differential pressure in the dust collection facility is reduced, and the backwashing interval is extended, the service life of the dust collection facility 14 can be extended.
(11) A power generation facility according to an eleventh aspect is a power generation facility 1000 that incinerates an object to be incinerated to generate power, the power generation facility 1000 including: an incinerator 10 in which the object to be incinerated is incinerated; a boiler that is positioned on an upstream side of the dust collection facility 14 in the flow direction of the exhaust gas EG and to which the exhaust gas EG generated by the incinerator 10 is supplied; the exhaust gas treatment system 100 according to the seventh aspect into which the exhaust gas EG that has passed through the boiler is introduced, in which the exhaust gas treatment system 100 includes a reducing agent introduction line 25 connecting the carbon dioxide recovery device 16 and the boiler, the carbon dioxide recovery device 16 includes a cooling tower 161 that cools the exhaust gas EG, an absorption tower 162 that absorbs carbon dioxide included in the cooled exhaust gas EG into an absorption liquid, a regeneration tower 163 that heats the absorption liquid in which the carbon dioxide has been absorbed by a reboiler 163b to which a heat medium is supplied, and separates the carbon dioxide from the absorption liquid, and a reclaimer 164 that separates the absorption liquid from the regeneration tower 163 into a first liquid in which impurities are concentrated and a second liquid from which impurities are separated, and the reducing agent introduction line 25, as the reducing agent supply portion 19, supplies the first liquid from the reclaimer 164 into the incinerator 10 as the reducing agent.
   As a result, the first liquid which is the drainage from the carbon dioxide recovery device 16 is used as a reducing agent. Therefore, the first liquid can be effectively disposed of in the incinerator 10. In addition, since the reducing agent introduction line 25 functions as the reducing agent supply portion 19, the amount of the reducing agent handled by the reducing agent supply portion 19 can be reduced.
(12) An exhaust gas treatment method according to a twelfth aspect is an exhaust gas treatment method that is used in a facility in which exhaust gas EG is generated, the facility including a dust collection facility 14 that includes a denitration layer 142 on which a denitration catalyst is carried and through which the exhaust gas EG passes, and a carbon dioxide recovery device 16 that is positioned on a downstream side of the dust collection facility 14 in a flow direction of the exhaust gas EG, the exhaust gas treatment method including: supplying the exhaust gas EG from the dust collection facility 14 to the carbon dioxide recovery device 16 while maintaining a state where a temperature of the exhaust gas EG is equal to or lower than a temperature of outlet gas of the dust collection facility 14.

### Industrial Applicability

According to the present disclosure, it is possible to provide an exhaust gas treatment system, a power generation facility including the same, and an exhaust gas treatment method, which can suppress an increase in consumption of an absorption liquid in a carbon dioxide recovery device while reducing power used in a process of treating the exhaust gas.

### Reference Signs List

1: furnace main body
2: fuel supply mechanism
3: furnace
10: incinerator
11: heat recovery steam generator
12: exhaust gas flow path
13: first heat recovery device
14: dust collection facility
13a: second heat medium valve
15: second heat recovery device
15a: first heat medium valve
16: carbon dioxide recovery device
17: chimney
18: outlet flow path
19: reducing agent supply portion
20: activated carbon supply portion
21: alkaline powder supply portion
22: alkali agent supply portion
23: bypass line
23a: one end
23b: other end
24: flow rate adjuster
25: reducing agent introduction line
30a: main steam line
30b: boiler water supply line
30c: first connection line
30d: second connection line
30e: third connection line
30g: first water supply bypass line
30h: second water supply bypass line
31: steam turbine
32: condenser
33a: first water supply pump
33b: second water supply pump
34: deaerator
41: first thermometer
42: second thermometer
43: third thermometer
44: nitrogen oxide concentration detection portion
45: sulfur oxide concentration detection portion
51: detection unit
52: determination unit
53: setting unit
54, 54a: control unit
55: storage unit
100: exhaust gas treatment system
141: dust collection facility main body
142: denitration layer
161: cooling tower
162: absorption tower
163: regeneration tower
163a: regeneration tower main body
163b: reboiler
164: reclaimer
191: reducing agent supply source
192: reducing agent supply line
200: garbage treatment system
201: activated carbon supply source
202: activated carbon supply line
211: alkaline powder supply source
212: alkaline powder supply line
221: alkali agent supply source
222: alkali agent supply line
300: power generation system
400: sensor
500: control device
1000: power generation facility
1100: computer
1110: processor
1120: main memory
1130: storage
1140: interface
A1: nitrogen oxide concentration
A2: sulfur oxide concentration
EG: exhaust gas
GEN: generator
T1: first temperature
T2: second temperature
T3: third temperature

## Claims

1. An exhaust gas treatment system comprising:
a dust collection facility that includes a denitration layer on which a denitration catalyst is carried and through which exhaust gas passes; and
a carbon dioxide recovery device that is positioned on a downstream side of the dust collection facility in a flow direction of the exhaust gas,
wherein the exhaust gas is supplied from the dust collection facility to the carbon dioxide recovery device while maintaining a state where a temperature of the exhaust gas is equal to or lower than a temperature of outlet gas of the dust collection facility.

2. The exhaust gas treatment system according to claim 1, further comprising:
a first heat recovery device that is positioned on an upstream side of the dust collection facility in the flow direction of the exhaust gas and that performs heat exchange between the exhaust gas and a heat medium;
a sensor that includes one or more of a first thermometer capable of detecting a temperature of the exhaust gas flowing between the first heat recovery device and the dust collection facility, and a second thermometer capable of detecting a temperature of the exhaust gas flowing between the dust collection facility and the carbon dioxide recovery device; and
a control device that controls an amount of the heat medium supplied to the first heat recovery device based on a detection result of one or more of the first thermometer and the second thermometer, and a gas temperature threshold value.

3. The exhaust gas treatment system according to claim 1, further comprising:
a first heat recovery device that is positioned on an upstream side of the dust collection facility in the flow direction of the exhaust gas and that performs heat exchange between the exhaust gas and a heat medium;
a bypass line that allows at least a part of the exhaust gas flowing into the first heat recovery device to join the exhaust gas flowing between the first heat recovery device and the dust collection facility without passing through the first heat recovery device;
a flow rate adjuster that is disposed in the bypass line and is capable of adjusting a flow rate of the exhaust gas flowing through the bypass line;
a sensor that includes one or more of a first thermometer capable of detecting a temperature of the exhaust gas flowing between the first heat recovery device and the dust collection facility, and a second thermometer capable of detecting a temperature of the exhaust gas flowing between the dust collection facility and the carbon dioxide recovery device; and
a control device that controls an opening degree of the flow rate adjuster based on a detection result of one or more of the first thermometer and the second thermometer, and a gas temperature threshold value.

4. The exhaust gas treatment system according to claim 2 or 3,
wherein the sensor has one or more of a nitrogen oxide concentration detection portion that is capable of detecting a nitrogen oxide concentration in the exhaust gas and a sulfur oxide concentration detection portion that is capable of detecting a sulfur oxide concentration in the exhaust gas, and
the control device changes the gas temperature threshold value based on a detection result of one or more of the nitrogen oxide concentration detection portion and the sulfur oxide concentration detection portion.

5. The exhaust gas treatment system according to any one of claims 1 to 3, further comprising:
a second heat recovery device that is positioned between the dust collection facility and the carbon dioxide recovery device in the flow direction of the exhaust gas and that performs heat exchange between the exhaust gas and the heat medium.

6. The exhaust gas treatment system according to claim 5, further comprising:
a sensor that includes a third thermometer capable of detecting a temperature of the exhaust gas flowing between the second heat recovery device and the carbon dioxide recovery device; and
a control device that controls an amount of the heat medium supplied to the second heat recovery device based on a detection result of the sensor and a gas temperature threshold value.

7. The exhaust gas treatment system according to any one of claims 1 to 3, further comprising:
a reducing agent supply portion capable of supplying a reducing agent to the exhaust gas that flows on an upstream side of the dust collection facility in the flow direction of the exhaust gas.

8. The exhaust gas treatment system according to any one of claims 1 to 3, further comprising:
an activated carbon supply portion capable of supplying activated carbon to the exhaust gas that flows on an upstream side of the dust collection facility in the flow direction of the exhaust gas.

9. The exhaust gas treatment system according to any one of claims 1 to 3, further comprising:
an alkaline powder supply portion capable of supplying an alkaline powder to the exhaust gas that flows on an upstream side of the dust collection facility in the flow direction of the exhaust gas.

10. The exhaust gas treatment system according to any one of claims 1 to 3, further comprising:
an alkali agent supply portion capable of supplying an alkali agent into the carbon dioxide recovery device,
wherein the carbon dioxide recovery device includes
a cooling tower that adds the alkali agent from the alkali agent supply portion to cooling tower circulating water while cooling the exhaust gas,
an absorption tower that absorbs carbon dioxide included in the cooled exhaust gas into an absorption liquid, and
a regeneration tower that heats the absorption liquid in which the carbon dioxide has been absorbed by a reboiler to which the heat medium is supplied, and separates the carbon dioxide from the absorption liquid.

11. A power generation facility that incinerates an object to be incinerated to generate power, the power generation facility comprising:
an incinerator in which the object to be incinerated is incinerated;
a boiler that is positioned on an upstream side of the dust collection facility in the flow direction of the exhaust gas and to which the exhaust gas generated by the incinerator is supplied; and
the exhaust gas treatment system according to claim 7 into which the exhaust gas that has passed through the boiler is introduced,
wherein the exhaust gas treatment system includes a reducing agent introduction line connecting the carbon dioxide recovery device and the boiler,
the carbon dioxide recovery device includes
a cooling tower that cools the exhaust gas,
an absorption tower that absorbs carbon dioxide included in the cooled exhaust gas into an absorption liquid,
a regeneration tower that heats the absorption liquid in which the carbon dioxide has been absorbed by a reboiler to which a heat medium is supplied, and separates the carbon dioxide from the absorption liquid, and
a reclaimer that separates the absorption liquid from the regeneration tower into a first liquid in which impurities are concentrated and a second liquid from which impurities are separated, and
the reducing agent introduction line, as the reducing agent supply portion, supplies the first liquid from the reclaimer into the incinerator as the reducing agent.

12. An exhaust gas treatment method that is used in a facility in which exhaust gas is generated, the facility including a dust collection facility that includes a denitration layer on which a denitration catalyst is carried and through which the exhaust gas passes, and a carbon dioxide recovery device that is positioned on a downstream side of the dust collection facility in a flow direction of the exhaust gas, the exhaust gas treatment method comprising:
supplying the exhaust gas from the dust collection facility to the carbon dioxide recovery device while maintaining a state where a temperature of the exhaust gas is equal to or lower than a temperature of outlet gas of the dust collection facility.
